(19) Europäisches Patentamt
European Patent Office
Office européen des brevets

(11) **EP 3 360 187 B1**

(12) **FASCICULE DE BREVET EUROPEEN**

(45) Date de publication et mention de la délivrance du brevet:
**26.06.2019 Bulletin 2019/26**

(21) Numéro de dépôt: **16778780.3**

(22) Date de dépôt: **05.10.2016**

(51) Int Cl.:
*H01M 8/04089* (2016.01)   *H01M 8/04746* (2016.01)
*H01M 8/0438* (2016.01)   *C25B 1/04* (2006.01)
*C25B 1/08* (2006.01)   *C25B 1/10* (2006.01)
*C25B 9/20* (2006.01)   *H01M 8/124* (2016.01)

(86) Numéro de dépôt international:
**PCT/EP2016/073727**

(87) Numéro de publication internationale:
**WO 2017/060267 (13.04.2017 Gazette 2017/15)**

(54) **SYSTÈME D'ÉLECTROLYSE DE L'EAU (SOEC) OU PILE À COMBUSTIBLE (SOFC) À FONCTIONNEMENT SOUS PRESSION DONT LA RÉGULATION EST AMÉLIORÉE**

SYSTEM ZUR ELEKTROLYSE EINES WASSER- (SOEC) ODER BRENNSTOFFZELLENSTAPELS (SOFC) MIT BETRIEB UNTER DRUCK MIT VERBESSERTER REGELUNG

SYSTEM FOR ELECTROLYSING WATER (SOEC) OR FUEL-CELL STACK (SOFC) OPERATING UNDER PRESSURE, THE REGULATION OF WHICH IS IMPROVED.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.10.2015 FR 1559504**

(43) Date de publication de la demande:
**15.08.2018 Bulletin 2018/33**

(73) Titulaire: **Commissariat à l'Énergie Atomique et aux Énergies Alternatives 75015 Paris (FR)**

(72) Inventeurs:
• **CHATROUX, André**
 **38210 Tullins (FR)**
• **GOUSSEAU, Georges**
 **38210 Moirans (FR)**

(74) Mandataire: **Nony**
 **11 rue Saint-Georges**
 **75009 Paris (FR)**

(56) Documents cités:
**US-A1- 2002 081 471**

• **STEPHANIE SEIDLER ET AL: "Pressurized solid oxide fuel cells: Experimental studies and modeling", JOURNAL OF POWER SOURCES, vol. 196, no. 17, 7 octobre 2010 (2010-10-07), pages 7195-7202, XP055260130, CH ISSN: 0378-7753, DOI: 10.1016/j.jpowsour.2010.09.100 cité dans la demande**
• **J E O'brien ET AL: "High Temperature Electrolysis Pressurized Experiment Design, Operation, and Results", , 13 septembre 2012 (2012-09-13), XP055260106, Idaho Falls, Idaho 83415, USA Extrait de l'Internet: URL:https://inldigitallibrary.inl.gov/sti/5516323.pdf [extrait le 2016-03-21] cité dans la demande**
• **X. SUN ET AL: "Performance Characterization of Solid Oxide Cells Under High Pressure", FUEL CELLS, vol. 15, no. 5, 2 juillet 2015 (2015-07-02), pages 697-702, XP055260683, DE ISSN: 1615-6846, DOI: 10.1002/fuce.201500020**
• **JENSEN S H ET AL: "Hydrogen and synthetic fuel production using pressurized solid oxide electrolysis cells", INTERNATIONAL JOURNAL OF HYDROGEN ENERGY, ELSEVIER SCIENCE PUBLISHERS B.V., BARKING, GB, vol. 35, no. 18, 1 septembre 2010 (2010-09-01), pages 9544-9549, XP027235608, ISSN: 0360-3199 [extrait le 2010-07-24] cité dans la demande**

• BURKE A ALAN ET AL: "Pressurized testing of a planar solid oxide fuel cell stack", INTERNATIONAL JOURNAL OF HYDROGEN ENERGY, vol. 38, no. 31, 10 septembre 2013 (2013-09-10), pages 13774-13780, XP028730762, ISSN: 0360-3199, DOI: 10.1016/J.IJHYDENE.2013.08.058 cité dans la demande

**Description**

Domaine technique

La présente invention concerne le domaine des piles à combustibles à oxydes solides (SOFC, acronyme anglais pour « Solid Oxide Fuel Cell ») et celui de l'électrolyse de l'eau à haute température (EHT, ou EVHT pour électrolyse de la vapeur d'eau à haute température, ou HTE acronyme anglais pour « High Temperature Electrolysis », ou encore HTSE acronyme anglais pour « High Temperature Steam Electrolysis ») également à oxydes solides (SOEC, acronyme anglais pour « Solid Oxide Electrolyte Cell »).

L'invention a trait plus particulièrement à la régulation de pression d'un système électrolyseur EHT ou d'une pile à combustible SOFC fonctionnant sous pression.

Bien que décrite en référence principalement à l'application d'électrolyse de l'eau à haute température, l'invention s'applique tout aussi bien à une pile à combustible SOFC.

Art antérieur

L'électrolyse de l'eau est une réaction électrolytique qui décompose l'eau en dioxygène et dihydrogène gazeux avec l'aide d'un courant électrique selon la réaction: $H_2O \rightarrow H_2 + 1/2 O_2$.

Pour réaliser l'électrolyse de l'eau, il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur.

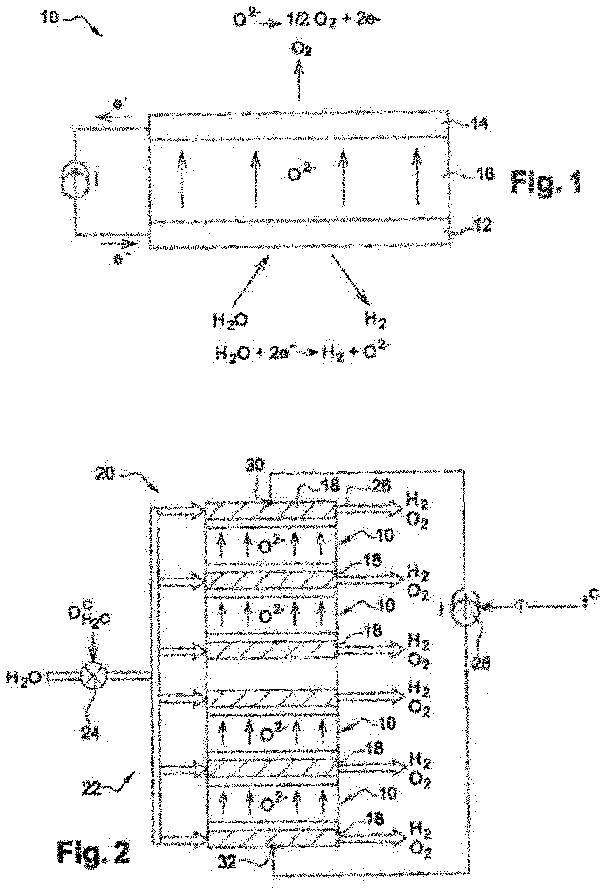

Comme schématisée en figure 1, une cellule d'électrolyse à oxydes solides 10, ou « SOEC » (acronyme anglo-saxon « Solid Oxide Electrolyte Cell ») comprend notamment :

-    une première électrode conductrice poreuse 12, ou « cathode », destinée à être alimentée en vapeur d'eau pour la production de dihydrogène,
-    une seconde électrode conductrice poreuse 14, ou « anode », par laquelle s'échappe le dioxygène ($O_2$) produit par l'électrolyse de l'eau injectée sur la cathode, et
-    une membrane à oxyde solide (électrolyte dense) 16 prise en sandwich entre la cathode 12 et l'anode 14, la membrane 16 étant conductrice anionique pour de hautes températures, usuellement des températures supérieures à 600°C.

En chauffant la cellule 10 au moins à cette température et en injectant un courant électrique / entre la cathode 12 et l'anode 14, il se produit alors une réduction de l'eau sur la cathode 12, ce qui génère du dihydrogène

($H_2$) au niveau de la cathode 12 et du dioxygène au niveau de l'anode 14.

Pour mettre en oeuvre l'électrolyse à haute température, il est connu d'utiliser un électrolyseur de type SOEC (acronyme anglais de « Solid Oxyde Electrolyte Cell »), constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau $H_2O$ dans le compartiment cathodique. Sous l'effet du courant appliqué à la cellule, la dissociation des molécules d'eau sous forme vapeur est réalisée à l'interface entre l'électrode à hydrogène (cathode) et l'électrolyte: cette dissociation produit du gaz dihydrogène H2 et des ions oxygène. Le dihydrogène est collecté et évacué en sortie de compartiment à hydrogène. Les ions oxygène $O^{2-}$ migrent à travers l'électrolyte et se recombinent en dioxygène à l'interface entre l'électrolyte et l'électrode à oxygène (anode).

Un empilement 20 de cellules d'électrolyse, destiné à produire une quantité importante d'hydrogène, est illustré par la vue schématique de la figure 2. Notamment, les cellules 10 sont empilées les unes sur les autres en étant séparées par des plaques d'interconnexion 18 connectées à une alimentation 22 en vapeur d'eau pour l'injection de cette vapeur sur les cathodes des cellules 10 conformément à un débit de vapeur d'eau $D_{H_2O}$ réglé par une vanne pilotable 24. Les plaques 18 sont également connectées à un collecteur de gaz 26 pour la collecte des gaz issus de l'électrolyse.

Un exemple d'empilement et de structure de plaques d'interconnexion est par exemple décrit dans la demande de brevet WO 2011/110676.

Un tel électrolyseur peut également fonctionner en co-électrolyse, c'est-à-dire avec un mélange de gaz en entrée cathodique composé de vapeur d'eau ($H_2O$) et de gaz carbonique ($CO_2$). Le mélange en sortie cathodique est alors composé d'hydrogène ($H_2$), de vapeur d'eau ($H_2O$), de monoxyde de carbone (CO) et de gaz carbonique ($CO_2$).

Pour la mise en oeuvre effective de l'électrolyse par l'empilement 20, l'empilement est porté à une température supérieure à 600°C, usuellement une température comprise entre 600°C et 950°C, l'alimentation en gaz est mise en marche à débit constant et une source d'alimentation électrique 28 est branchée entre deux bornes 30, 32 de l'empilement 20 afin d'y faire circuler le courant *I*.

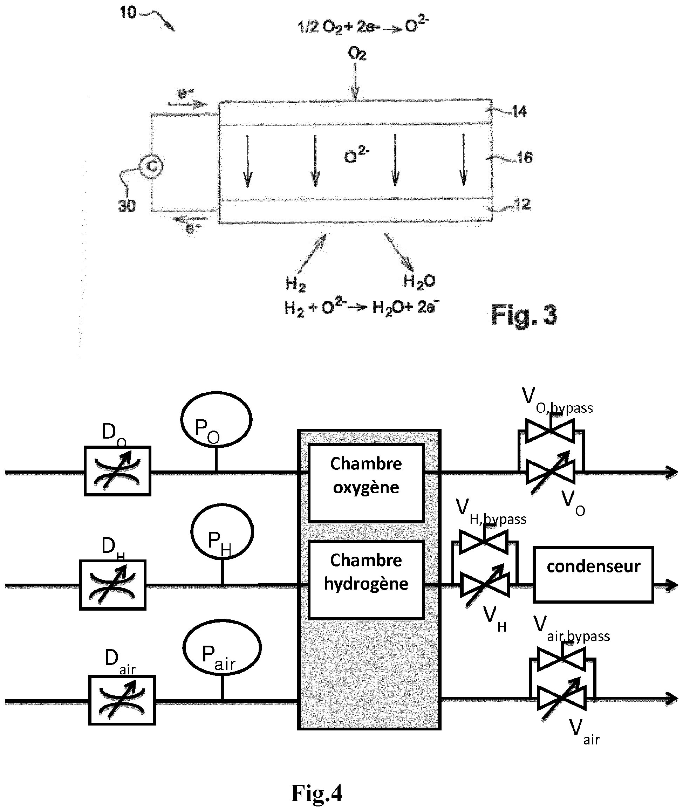

Une pile à oxyde solide à haute température, plus connue sous le nom de pile SOFC (pour « *Solid Oxyde Fuel Cell* ») et un électrolyseur EVHT peuvent avoir des structures identiques, seul leur mode de fonctionnement étant différent. En se référant à la figure 3, une cellule électrochimique constitutive d'une pile SOFC comprend les mêmes éléments, que sont l'anode 12, la cathode 14, l'électrolyte 16, qu'une cellule d'électrolyse.

Une cellule de la pile est alimentée, avec des débits constants, sur son anode par du dihydrogène ou un autre combustible comme du méthane $CH_4$, et sur sa cathode par du dioxygène pur ou contenu dans l'air envoyé, et connectée à une charge C pour délivrer le courant électrique produit.

Dans un réacteur à empilement tel que décrit ci-dessus, l'étanchéité entre les cellules à oxydes solides 10 et les plaques d'interconnexion 18 est réalisée par des joints qui constituent un des points faibles du système.

En effet, ces joints à base de verre ou de vitrocéramique assurant l'étanchéité de l'empilement vis-à-vis de l'atmosphère sont fragiles et ne supportent qu'une faible surpression de l'ordre de quelques dizaines ou centaines de millibars.

Jusqu'à présent, de tels systèmes ne fonctionnent qu'à pression atmosphérique même si quelques études scientifiques commencent à analyser le fonctionnement sous pression.

Le fonctionnement interne d'une pile à combustible SOFC ou d'un réacteur EHT sous pression, typiquement de quelques bars à quelques dizaines de bars, typiquement 30 bars, requiert alors une solution pour éviter la perte des étanchéités par les joints.

Il est déjà connu une solution qui consiste à placer le réacteur à empilement EHT ou une pile SOFC au sein d'une enceinte étanche elle-même pressurisée. On peut citer ici la publication [1], les demandes de brevets ou brevets FR 2957361A1, US2002/0081471 et US 6689499 B2 qui divulguent ce type de solution. Cette solution connue offre l'avantage de pouvoir imposer la même pression entre l'intérieur et l'extérieur de l'empilement. Autrement dit, il y a un équilibrage des pressions entre l'enceinte et les chambres (compartiments) de l'empilement. Cela permet donc un fonctionnement à une pression élevée, de quelques bars à quelques dizaines de bars, sans sollicitation mécanique des joints en verre ou en vitrocéramique.

Ainsi, tant que la pression de chaque chambre (compartiment) anodique ou cathodique de l'empilement est globalement équilibrée avec la pression interne de l'enceinte, les joints d'étanchéité ne sont soumis qu'à une pression différentielle faible, typiquement quasi-nulle.

En mode électrolyse, l'inconvénient majeur d'une telle solution est que cela se fait au prix d'une perte d'une partie de la production d'hydrogène, qui est brulée dans l'enceinte. Ce n'est donc pas actuellement une solution envisageable à l'échelle industrielle, en mode électrolyse.

Certaines piles à combustibles haute température sont conçues de telle sorte qu'elles ne sont pas étanches côté cathode, ce qui peut simplifier le fonctionnement sous pression puisque dans ce cas la cathode est à la pression de l'enceinte.

En particulier, le brevet US6689499 B2 précité met en oeuvre cette technique en mode pile à combustible, la recombinaison des gaz de sortie servant à chauffer l'empilement.

En mode électrolyse, la difficulté consiste aussi à obtenir en permanence et simultanément la même pression (à quelques millibars près) dans l'enceinte, dans chaque chambre anodique et dans chaque chambre cathodique, afin de récupérer au mieux les gaz produits.

Autrement dit, il est nécessaire de réaliser une régulation de pression suffisamment précise sur les lignes d'alimentation et de récupération des gaz dans l'empilement pour tenir la contrainte des pressions différentielles faibles sur les joints.

Mais, une des difficultés est due au fait que le gaz circulant dans les chambres cathodiques contient beaucoup de vapeur d'eau, laquelle peut se condenser lors de sa détente à pression atmosphérique.

Jusqu'à présent, les spécialistes en thermique préconisent une régulation de pression sur gaz sec. C'est donc ce qui est généralement mis en oeuvre.

On peut citer ici les études résumées dans les publications [2] à [6]. Dans la plupart de ces études, les essais portent sur des piles à combustibles SOFC pour lesquels le gaz est sec ou très peu humide, ou alors sur des systèmes électrolyseurs SOEC dans lesquels les gaz sont asséchés dans un condenseur installé à l'intérieur de l'enceinte sous pression. De plus, dans la plupart des cas, seul un point de fonctionnement à 3 bars ou à 5 bars est possible.

Dans le domaine voisin des piles à combustibles à membrane d'échange de protons (PEM), les contraintes sur les joints et les pressions entre les chambres sont totalement différents puisque la membrane peut supporter une pression différentielle de plusieurs bars. Cependant, on peut noter la demande de brevet WO2012/008954A1 qui s'intéresse à une régulation de pression sur gaz humide grâce à une pompe fonctionnant à contre-flux et le brevet US7985507B2 qui divulgue sur une régulation au moyen d'une vanne tout-ou-rien. Les solutions divulguées dans cette demande et ce brevet ne sont cependant pas applicables dans les systèmes à oxydes solides aux contraintes bien plus importantes.

Une autre difficulté de la solution consistant à agencer un électrolyseur EHT ou une pile à combustible SOFC à l'intérieur d'une enceinte pressurisée est liée au fait que l'empilement comprend des chambres (anodique et cathodique) de circulation des gaz qui présentent intrinsèquement un faible volume par rapport à celui de l'enceinte. La régulation de pression est dans ce cas difficile, car les variations de pression à l'intérieur de l'enceinte peuvent être très lentes par rapport celles à l'intérieur des chambres de l'empilement.

De cette manière, en cas d'augmentation rapide de pression dans l'une ou l'autre des chambres de l'empilement, il sera très difficile de faire monter la pression de l'enceinte aussi vite. Pour supprimer cette contrainte, l'étude [7] propose de mettre en oeuvre un volume tampon en sortie de chaque ligne de circulation de gaz de l'empilement de façon à avoir trois volumes de gaz identiques, c'est-à-dire un volume comprenant les chambres anodiques et un premier volume tampon, un volume comprenant les chambres cathodiques et un deuxième volume tampon, et le volume délimité par l'enceinte. Ainsi, en disposant de trois volumes identiques, il est possible d'utiliser les mêmes vannes tout-ou-rien pour réguler la pression de l'enceinte et celle régnant à l'intérieur des chambres de l'empilement. Cette solution est contraignante car cela correspond à multiplier le volume de l'enceinte pression par un facteur 3 et donc le coût du système est bien plus important. Ces volumes tampon sont également pénalisants en mode de fonctionnement réversible car ils pénalisent le temps de basculement d'un mode à l'autre puisqu'il est nécessaire de les purger en gaz neutre à chaque fois.

En d'autres termes, il n'existe pas dans l'état de l'art relatif aux électrolyseurs et piles à combustibles haute température, de solution satisfaisante de système de régulation de pression sur gaz humide qui couvre une plage de fonctionnement depuis la pression atmosphérique jusqu'à quelques dizaines de bars.

Il existe donc un besoin d'améliorer les systèmes électrolyseurs ou piles à combustibles fonctionnant sous pression, notamment afin de réguler au mieux la pression dans une plage de fonctionnement depuis la pression atmosphérique jusqu'à quelques dizaines de bars.

Le but de l'invention est de répondre au moins en partie à ce besoin.

Exposé de l'invention

Pour ce faire, l'invention concerne un système comportant :

- au moins une première chambre dans laquelle un premier gaz, qui est un gaz potentiellement humide, est apte à circuler;
- au moins une première ligne d'alimentation apte à alimenter en gaz potentiellement humide, l'entrée de la première chambre jusqu'à une pression maximale de fonctionnement $P_{max}$, la première ligne d'alimentation comprenant un premier régulateur de débit apte à réguler le débit du premier gaz $D_H$ entre une valeur nulle et une valeur maximale $D_{H,max}$ :
- au moins une deuxième chambre dans laquelle un deuxième gaz est apte à circuler ;

- au moins une deuxième ligne d'alimentation apte à alimenter en deuxième gaz l'entrée de la deuxième chambre, la deuxième ligne d'alimentation comprenant un deuxième régulateur de débit apte à réguler le débit du deuxième gaz $D_O$ entre une valeur nulle et une valeur maximale $D_{O,max}$;
- une enceinte dans laquelle les première et deuxième chambres sont logées, dans laquelle un troisième gaz, dit gaz d'équilibrage, est apte à circuler, l'enceinte étant apte à fonctionner sous pression du gaz d'équilibrage jusqu'à la pression maximale de fonctionnement $P_{max}$;
- une troisième ligne d'alimentation apte à alimenter l'intérieur de l'enceinte en gaz d'équilibrage, de préférence de l'air, la troisième ligne d'alimentation comprenant un troisième régulateur de débit apte à réguler le débit du gaz d'équilibrage $D_{air}$ entre une valeur nulle et une valeur maximale $D_{air,max}$;
- des capteurs de pression ($P_H$, $P_O$, $P_{air}$), aptes à mesurer la pression dans chacune des première et deuxième chambres et dans l'enceinte, entre la pression atmosphérique et la valeur de pression maximale $P_{max}$;
- au moins trois vannes de régulation ($V_H$, $V_O$, $V_{air}$), agencées à l'extérieur de l'enceinte et respectivement sur la ligne de sortie de la ou des premières chambres, de la ou des deuxièmes chambres et de l'enceinte, chaque vanne étant apte à fonctionner chacune à une température supérieure à la température de condensation du gaz humide à la pression maximale $P_{max}$ considérée, chaque vanne étant apte à être ouverte de 0% à 100% et présentant une capacité $K_v$ adaptée à la pression maximale $P_{max}$ et au débit moyen du gaz considéré sur chacune des trois lignes de sortie;
- des moyens de chauffage des lignes contenant du gaz humide à une température supérieure à la température de condensation de ce gaz humide à la pression maximale $P_{max}$ considérée ;
- des moyens de commande et d'asservissement pour commander et asservir les vannes de régulation ($V_H$, $V_O$, $V_{Air}$) en fonction des différences de valeurs de pression mesurées par les capteurs de pression de sorte à obtenir une différence minimale de pression entre la ou les première chambre, la ou les deuxième chambres et l'enceinte,

système dans lequel, en incluant le volume des lignes de circulation de gaz en amont et en aval de l'enceinte et des chambres, soit $Vol_H$ le volume de la ou des premières chambres, $Vol_O$ le volume de la ou des deuxièmes chambres et $Vol_{air}$ le volume de l'enceinte, les régulateurs de débit sont dimensionnés pour respecter le ratio :

$$\frac{\text{Vol}_H}{D_{H,max}} = \frac{\text{Vol}_O}{D_{O,max}} = \frac{\text{Vol}_{air}}{D_{air,max}}.$$

Par « gaz potentiellement humide », on entend ici et dans le cadre de l'invention, un gaz dont l'état peut être déjà humide en entrée du système selon l'invention ou passer à un état humide lors de sa génération ou son passage au sein du système.

Par « gaz humide », on entend ici et dans le cadre de l'invention un gaz (ou un mélange de gaz) contenant une part de vapeur d'eau ou un gaz composé uniquement de vapeur d'eau.

Eventuellement, le gaz peut contenir une part de vapeur issue de la vaporisation d'un liquide autre que l'eau.

Selon une variante, le système selon l'invention comprend un condenseur du gaz humide, agencé en aval de la vanne de régulation $V_H$, sur la ligne de sortie de la ou des premières chambres. Ainsi, le système ne comprend pas obligatoirement de condenseur. En effet, dans certaines applications, le gaz humide en sortie de système peut être utilisé tel quel sans qu'il soit nécessaire de le condenser. Cela peut être le cas si le gaz humide doit alimenter un certain type de réacteur ou réservoir, comme par exemple un méthaneur...

Selon un mode de réalisation avantageux, les moyens de commande et d'asservissement sont aptes en outre à commander et asservir les régulateurs de débit du deuxième gaz $D_O$ et du gaz d'équilibrage $D_{Air}$ en fonction de l'état d'ouverture des vannes de régulation du deuxième gaz Vo et du gaz d'équilibrage $V_{Air}$, afin d'éviter les états d'ouverture ou de fermeture complète des vannes du deuxième gaz Vo et du gaz d'équilibrage $V_{Air}$.

Selon une application avantageuse, le système comprend un réacteur d'électrolyse ou de co-électrolyse à haute température (EHT) comprenant un empilement de cellules d'(de co-)électrolyse élémentaires à oxydes solides comprenant chacune une anode, une cathode, et un électrolyte intercalé entre l'anode et la cathode, les cellules étant connectées électriquement en série, l'empilement comprenant deux bornes électriques pour l'alimentation en courant des cellules et définissant des chambres de circulation de vapeur d'eau et d'hydrogène ou de vapeur d'eau, d'hydrogène et dioxyde de carbone ($CO_2$) sur les cathodes en tant que premières chambres et, des chambres de circulation en air ou en azote ou en oxygène ou un mélange de gaz contenant de l'oxygène sur les anodes en tant que deuxièmes chambres.

Selon une autre application avantageuse, le système comprend une pile à combustible (SOFC) à haute température comprenant un empilement de cellules électrochimiques élémentaires à oxydes solides comprenant chacune une anode, une cathode, et un électrolyte intercalé entre l'anode et la cathode, les cellules étant connectées électriquement en série, l'empilement comprenant deux bornes électriques pour la récupération en courant des cellules et définissant des chambres de circulation en dihydrogène ou un autre gaz combustible ou un mélange contenant un gaz combustible sur les anodes en tant que premières chambres et des chambres de circulation en air ou en azote ou en oxygène ou un mélange de gaz contenant de l'oxygène sur les cathodes en tant que deuxièmes chambres.

Dans ce cas, le gaz en entrée de la première chambre n'est pas forcément humide, par contre il est humide en sortie car la vapeur d'eau est un produit de la réaction électrochimique dans cette première chambre.

Le système peut être réversible, la pile à combustible pouvant être un électrolyseur haute température et vice-versa.

L'invention s'applique aux piles ou électrolyseur "moyenne température", i.e. 400°C, ou encore PCFC, en anglais pour « *Proton Ceramic Fuel Cell* ».

De manière générale, en dehors du domaine technique des systèmes électrochimiques à oxydes solides l'invention s'applique à tous les systèmes pour lesquels il y a un besoin de régulation de pression de plusieurs chambres étanches logées dans une enceinte principale et dans chacune desquelles doit circuler un gaz sous pression.

Selon une variante de l'invention, le système peut comprendre au moins trois capteurs de pression absolue ($P_H$, $P_O$, $P_{air}$), aptes à mesurer chacun la pression respectivement dans chacune des première chambres, dans chacune des deuxième chambres et dans l'enceinte.

De manière alternative, le système peut comprendre au moins un capteur de pression absolue $P_H$, apte à mesurer chacun la pression dans chacune des première chambres, et comprenant au moins deux capteurs de pression différentiels aptes à mesurer respectivement la différence de pression entre la ou les deuxième chambres et la ou les première chambres $\Delta P_O=(P_O-P_H)$ et entre l'enceinte et la ou les première chambres $\Delta P_{air}=(P_{air}-P_H)$.

Selon une autre variante de l'invention, le système peut comprendre en outre des vannes de by-pass $V_{H,bypass}$, $V_{O,bypass}$ et $V_{air,bypass}$ agencées chacune en parallèle respectivement des vannes de régulation $V_H$, Vo et $V_{air}$. Ces vannes by-pass permettent un fonctionnement à la pression atmosphérique lorsqu'elles sont ouvertes. A cet effet, ces vannes de by-pass ont un diamètre de passage du même ordre de grandeur que celui des lignes de circulation des gaz de façon à réduire la perte de charge au passage.

Ainsi, l'invention consiste essentiellement à :

- réguler en amont de l'une des chambres, le débit de gaz humide $D_H$ de façon à garantir la stabilité électrochimique du point de fonctionnement prédéterminé;
- contrôler la pression grâce aux vannes de régulation $V_H$, Vo et $V_{Air}$ agencés en aval de l'empilement sur les gaz dont celui humide, qui sont en outre généralement chauds.

Lors du fonctionnement du système, il va se produire au niveau des vannes de régulation, une détente des gaz qui a pour conséquence un refroidissement de ceux-ci.

Aussi, la solution selon l'invention va à l'encontre des préconisations habituelles des spécialistes de la thermique qui écartent un tel refroidissement car ils considèrent que cela peut conduire à la formation de gouttelettes d'eau liquide qui pourraient obturer l'orifice de la vanne.

Pour éviter cela, les spécialistes de la thermique proposent plutôt un assèchement des gaz avant leur arrivée sur les vannes de régulation.

Or, les inventeurs considèrent de par leur expérience que la solution selon l'invention qui consiste à effectuer une régulation sur gaz humide, fonctionne très bien à condition de maintenir les lignes contenant de la vapeur d'eau à une température supérieure à la température de condensation de la vapeur d'eau à la pression maximale $P_{max}$ considérée.

Et une régulation sur gaz humide présente même l'avantage pour les systèmes à oxydes solides, comme un réacteur EHT ou une pile SOFC de participer, grâce à cette détente, au refroidissement du gaz avant qu'il ne soit envoyé dans le condenseur dans lequel il sera refroidi pour éliminer la majorité de la vapeur d'eau.

De façon à avoir des changements de pression du même ordre de grandeur dans chacun des trois compartiments, à savoir la ou les premières chambres, la ou les deuxièmes chambres, et l'enceinte, il convient d'avoir le même ratio entre le volume du compartiment considéré et le débit de gaz maximum qui peut y être injecté.

En incluant le volume des lignes de circulation de gaz en amont et en aval de l'enceinte et des chambres, soit $Vol_H$ le volume de la ou des premières chambres, $Vol_O$ le volume de la ou des deuxièmes chambres et $Vol_{air}$ le volume de l'enceinte, les débitmètres de gaz (régulateurs de débit) sont dimensionnés pour respecter le ratio :

$$\frac{Vol_H}{D_{H,max}} = \frac{Vol_O}{D_{O,max}} = \frac{Vol_{air}}{D_{air,max}}$$

Dans le cas particulier d'un système pour lequel il y a un risque que l'enceinte ne soit pas parfaitement étanche, on veille à surdimensionner le débit de gaz d'équilibrage maximal à l'intérieur de l'enceinte $D_{Air,max}$ de façon à tenir compte de la (des) fuite(s) de l'enceinte qu'il sera nécessaire de compenser par une augmentation du débit de gaz.

Contrairement à certaines solutions de l'art antérieur, notamment celle divulguée dans la publication [7], la régulation des débits selon l'invention se fait sans qu'il soit nécessaire de mettre en oeuvre des volumes tampon.

L'invention concerne également un procédé de fonctionnement du système qui vient d'être décrit, comprenant les étapes suivantes :

a/ définir les consignes de fonctionnement suivantes :

a1/ définir un débit $D_H$ qui correspond à la quantité de gaz potentiellement humide nécessaire pour un point de fonctionnement électrochimique prédéterminé;

a2/ définir un débit $D_O$ qui correspond à la quantité de deuxième gaz nécessaire pour un point de fonctionnement électrochimique prédéterminé;

a3/ définir un débit $D_{air}$ qui correspond à la quantité de deuxième gaz nécessaire pour assurer la détection et la sécurité vis-à-vis des fuites et éviter la formation d'une atmosphère explosive dans l'enceinte;

a4/ définir une pression $P_{consigne}$ pour le point de fonctionnement prédéterminé ;

a5/ définir la pression différentielle $\Delta P_{O,consigne}$ correspondant à l'écart de pressions entre celle régnant dans la ou les deuxièmes chambres et celle dans la ou les premières chambres;

a6/ définir la pression différentielle $\Delta P_{air,consigne}$ correspondant à l'écart de pressions entre celle dans l'enceinte et celle régnant dans la ou les premières chambres ;

b/ appliquer les régulations suivantes :

b1/ actionner le (ou les) régulateur(s) de débit de gaz humide afin de réguler le débit $D_H$ du gaz humide ;

b2/ actionner le (ou les) régulateur(s) de débit de deuxième gaz afin de réguler le débit $D_O$ entrant dans la ou les secondes chambres;

b3/ actionner le (ou les) régulateur(s) de débit du gaz d'équilibrage afin de réguler le débit $D_{air}$ entrant dans l'enceinte;

b4/ actionner la vanne de régulation $V_H$ du gaz humide pour réguler la pression $P_H$ réelle de la ou des premières chambres sur la valeur de consigne $P_{consigne}$ ;

b5/ actionner la vanne Vo du deuxième gaz de sorte que la pression différentielle réelle entre la ou les deuxièmes chambres et la ou les premières chambres $\Delta P_O = (P_O - P_H)$, soit régulée en fonction de l'erreur mesurée par rapport à la consigne $(\Delta P_{O,consigne} - \Delta P_O)$, afin que la pression $P_O$ du deuxième gaz suive celle $P_H$ de la ou des premières chambres avec la pression différentielle de consigne $\Delta P_{O,consigne}$;

b6/ actionner la vanne $V_{air}$ du gaz d'équilibrage de sorte que la pression différentielle réelle entre l'enceinte et la ou les premières chambres $\Delta P_{air} = (P_{air} - P_H)$, soit régulée en fonction de l'erreur mesurée par rapport à la consigne $(\Delta P_{air,consigne} - \Delta P_{air})$, afin que la pression $P_{air}$ du gaz d'équilibrage de l'enceinte celle $P_H$ de la ou des premières chambres avec la pression diffé-

rentielle de consigne $\Delta P_{air,consigne}$.

Selon une variante du procédé, il est prévu en outre une étape d'augmentation de débit du deuxième gaz $D_O$ et du gaz d'équilibrage $D_{Air}$ si les vannes de régulation respectivement du deuxième gaz Vo et du gaz d'équilibrage $V_{Air}$, sont proches d'un état de fermeture complète.

A contrario, on peut prévoir une étape de diminution de débit du deuxième gaz $D_O$ et du gaz d'équilibrage $D_{Air}$ si les vannes de régulation respectivement du deuxième gaz $V_O$ et du gaz d'équilibrage $V_{Air}$, sont proches d'un état d'ouverture complète.

Autrement dit, en complément des régulations des étapes b1/ à b6/, on peut prévoir une augmentation ou diminution des débits $D_O$ et $D_{air}$, de préférence par asservissement, lorsque les vannes de régulation du deuxième gaz $V_O$ et du gaz d'équilibrage dans l'enceinte $V_{air}$ risquent d'atteindre leurs limites de fermeture ou d'ouverture. Ainsi :

- si $V_O$ risque de se fermer, alors le débit $D_O$ est augmenté ;
- si $V_O$ risque de s'ouvrir à 100%, alors le débit $D_O$ est diminué ;
- si $V_{air}$ risque de se fermer, alors le débit $D_{air}$ est augmenté ;
- si $V_{air}$ risque de s'ouvrir à 100%, alors le débit $D_{air}$ est diminué.

En phase de montée en pression, la vanne de régulation $V_H$ du gaz potentiellement humide peut se fermer complètement. Dans ce cas, lorsque le système est un système électrochimique à oxydes solides, alors on veille à prendre des mesures de sécurité pour interrompre la production de gaz ou pour maintenir à une valeur minimale le débit du gaz.

En particulier, lorsque le système comprend un réacteur d'(de co-) électrolyse, la fermeture complète de la vanne de régulation $V_H$ du gaz humide (vapeur d'eau et hydrogène produit), il n'y a pratiquement plus de circulation des gaz réactifs sur les cellules d'électrolyse, il convient donc de mettre une sécurité pour stopper la production d'hydrogène en donnant une consigne d'intensité électrique à zéro.

De même, en mode pile à combustible SOFC il est peut être nécessaire de maintenir un débit d'oxygène pour alimenter les cellules en comburant. Cela permet de définir une valeur minimale de débit d'oxygène $D_O$ en dessous de laquelle le régulateur de débit ne pourra pas descendre. Une autre possibilité consiste à mettre une sécurité pour stopper la production d'électricité en donnant une consigne d'intensité électrique à zéro.

Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :

- la figure 1 est une vue schématique d'une cellule électrochimique élémentaire d'un électrolyseur EVHT ;
- la figure 2 est une vue schématique d'un empilement de cellules selon la figure 1 ;
- la figure 3 est une vue schématique d'une cellule électrochimique d'une pile à combustible SOFC ;
- la figure 4 est une vue schématique d'un système selon l'invention comprenant un électrolyseur EHT, la figure montrant les capteurs et régulateurs de débit nécessaires à la régulation de pression dans les chambres de circulation de la vapeur d'eau et d'hydrogène, de l'oxygène et dans l'enceinte sous pression qui loge les chambres ;
- la figure 5 est une vue schématique des capteurs et régulateurs de débit avec la représentation des boucles d'asservissement du système selon la figure 4;
- la figure 6 est un organigramme informatique des régulations de pression selon le mode de réalisation de la figure 4;
- la figure 7 est un organigramme informatique de la régulation conforme à l'invention du débit $D_O$ des chambres de circulation de l'oxygène en fonction du pourcentage d'ouverture de la vanne $V_O$ dans un module d'électrolyse haute température selon les figures 9 à 18;
- la figure 8 est un organigramme informatique de la régulation conforme à l'invention du débit $D_{air}$ de l'enceinte sous pression en fonction du pourcentage d'ouverture de la vanne $V_{air}$ dans un module d'électrolyse haute température selon les figures 9 à 18;
- la figure 9 est une vue en éclaté d'un mode de réalisation d'un module d'électrolyse EHT selon la demande de brevet déposée en France le 18 décembre 2014 sous le n° 14 62699 et utilisé comme partie d'un système selon l'invention ;
- la figures 10, est une vue en coupe d'un module assemblé selon la figure 9, la coupe étant réalisée respectivement dans le plan de circulation du gaz d'équilibrage,
- la figure 11 est une vue de détail de la figure 10, montrant le passage du gaz d'équilibrage dans les gorges de logement du dispositif d'isolation et d'étanchéité entre l'intérieur et l'extérieur du module,
- les figures 12 et 13 sont des vues en coupe d'un module assemblé selon la figure 9, la coupe étant réalisée respectivement dans le plan de circulation de la vapeur d'eau amenée et de l'hydrogène produit, et dans le plan de circulation de l'air amené et l'oxygène produit,
- la figure 14 est une vue en éclaté d'un mode de réalisation d'un réacteur d'électrolyse EHT à empilement de deux modules selon la demande de brevet déposée en France le 18 décembre 2014 sous le n° 14 62699 et utilisé comme partie d'un système selon l'invention ;

- les figures 15, 16 et 17 sont des vues en coupe d'un module assemblé selon la figure 14, la coupe étant réalisée respectivement dans le plan de circulation de l'air amené et l'oxygène produit, dans le plan de circulation de la vapeur d'eau amenée et de l'hydrogène produit, et enfin dans le plan de circulation du gaz d'équilibrage,
- la figure 18 est une vue du dessous d'un réacteur d'électrolyse selon les figures 14 à 17.

Les figures 1 à 3 relatives à l'état de l'art ont déjà été commentées en préambule. Elles ne sont donc pas détaillées ci-après.

Par souci de clarté, les mêmes éléments d'un réacteur d'électrolyse EHT selon l'état de l'art et d'un réacteur d'électrolyse EHT utilisé en tant que partie d'un système selon l'invention sont désignés par les mêmes références numériques.

On précise ici dans l'ensemble de la présente demande, les termes « inférieur », « supérieur », « dessus », « dessous », « intérieur », « extérieur », « « interne » « externe» sont à comprendre par référence à un interconnecteur selon l'invention en vue de coupe transversale selon l'axe de symétrie X.

On précise également que les termes « amont », « aval », « entrée », « sortie » sont à considérer par rapport au sens de circulation des gaz.

On précise également que les modules d'électrolyseurs ou de piles à combustible décrits sont de type à oxydes solides (SOEC, acronyme anglais de « *Solid Oxyde Electrolyte Cell* »ou SOFC, acronyme anglais de « *Solid Oxide Fuel Cell* ») fonctionnant à haute température.

Ainsi, tous les constituants (anode/électrolyte/cathode) d'une cellule d'électrolyse ou de pile sont des céramiques. La haute température de fonctionnement d'un électrolyseur (réacteur d'électrolyse) ou d'une pile est typiquement comprise entre 600°C et 950°C.

Typiquement, les caractéristiques d'une cellule d'électrolyse élémentaire SOEC convenant à l'invention, du type cathode support (CSC), peuvent être celles indiquées comme suit dans le tableau ci-dessous.

**TABLEAU**

| Cellule d'électrolyse | Unité | Valeur |
|---|---|---|
| **Cathode 2** | | |
| Matériau constitutif | | Ni-YSZ |
| Epaisseur | $\mu$m | 315 |
| Conductivité thermique | W m$^{-1}$ K$^{-1}$ | 13,1 |
| Conductivité électrique | $\Omega^{-1}$ m$^{-1}$ | $10^5$ |
| Porosité | | 0,37 |
| Perméabilité | m$^2$ | $10^{-13}$ |

(suite)

| Cellule d'électrolyse | Unité | Valeur |
|---|---|---|
| **Cathode 2** | | |
| Tortuosité | | 4 |
| Densité de courant | A.m$^{-2}$ | 5300 |
| **Anode 4** | | |
| Matériau constitutif | | LSM |
| Epaisseur | $\mu$m | 20 |
| Conductivité thermique | W m$^{-1}$ K$^{-1}$ | 9,6 |
| Conductivité électrique | $\Omega^{-1}$ m$^{-1}$ | 1 10$^4$ |
| Porosité | | 0,37 |
| Perméabilité | m$^2$ | $10^{-13}$ |
| Tortuosité | | 4 |
| Densité de courant | A.m$^{-2}$ | 2000 |
| **Electrolyte 3** | | |
| Matériau constitutif | | YSZ |
| Epaisseur | $\mu$m | |
| Résistivité | $\Omega$ m | 0,42 |

En se référant à la figure 4, le système selon l'invention est régulé en pression de la pression atmosphérique à une pression choisie de l'ordre de 30 bars.

Le système comprend tout d'abord un réacteur d'électrolyse ou de co-électrolyse à haute température (EHT) comprenant un empilement 20 de cellules d' (de co-) électrolyse élémentaires à oxydes solides comprenant chacune une anode, une cathode, et un électrolyte intercalé entre l'anode et la cathode, les cellules étant connectées électriquement en série, l'empilement comprenant deux bornes électriques pour l'alimentation en courant des cellules et définissant des chambres de circulation 21 de vapeur d'eau et d'hydrogène ou de vapeur d'eau, d'hydrogène et dioxyde de carbone ($CO_2$) sur les cathodes et, des chambres de circulation 23 en air ou en azote ou en oxygène ou un mélange de gaz contenant de l'oxygène sur les anodes.

Le système comprend en outre :

- une ligne d'alimentation apte à alimenter en vapeur d'eau l'entrée des chambres 21 jusqu'à une pression maximale de fonctionnement $P_{max}$ sur laquelle est agencé un régulateur de débit apte à réguler le débit de la vapeur d'eau et de l'hydrogène produit $D_H$ entre une valeur nulle et une valeur maximale $D_{H,max}$ ;
- une ligne d'alimentation apte à alimenter en oxygène l'entrée des chambres 23, sur laquelle est agencé un régulateur de débit apte à réguler le débit d'oxygène $D_O$ entre une valeur nulle et une valeur maximale $D_{O,max}$;

- une enceinte 40 dans laquelle l'empilement 20 avec ses chambres 21, 23 est logé, dans laquelle de l'air en tant que gaz d'équilibrage, est apte à circuler, l'enceinte étant apte à fonctionner sous pression jusqu'à la pression maximale de fonctionnement $P_{max}$ ;
- une ligne d'alimentation apte à alimenter l'intérieur de l'enceinte en air, et sur laquelle est agencé un régulateur de débit apte à réguler le débit d'air $D_{air}$ entre une valeur nulle et une valeur maximale $D_{air,max}$ ;
- des capteurs de pression $P_H$, $P_O$, $P_{air}$, aptes à mesurer la pression dans les chambres 21, 23 et dans l'enceinte 40, entre la pression atmosphérique et la valeur de pression maximale $P_{max}$ ;
- au moins trois vannes de régulation $V_H$, Vo, $V_{air}$, agencées à l'extérieur de l'enceinte 40 et respectivement sur la ligne de sortie des chambres 21, des chambres 23 et de l'enceinte 40, chaque vanne étant apte à fonctionner chacune à une température supérieure à la température de condensation du gaz humide à la pression maximale $P_{max}$ considérée, chaque vanne étant apte à être ouverte de 0% à 100% et présentant une capacité $K_v$ adaptée à la pression maximale $P_{max}$ et au débit moyen du gaz considéré sur chacune des trois lignes de sortie;
- des moyens de chauffage des lignes de la vapeur d'eau et de l'hydrogène produit à une température supérieure à la température de condensation de ce gaz humide à la pression maximale $P_{max}$ considérée ;
- un condenseur 50, agencé en aval de la vanne de régulation $V_H$, sur la ligne de sortie des chambres 21;
- des moyens de commande et d'asservissement pour commander et asservir les vannes de régulation ($V_H$, $V_O$, $V_{Air}$) en fonction des différences de valeurs de pression mesurées par les capteurs de pression de sorte à obtenir une différence minimale de pression entre les chambres 21, 23 et l'enceinte 40.

En incluant le volume des lignes de circulation de gaz en amont et en aval de l'enceinte et des chambres, soit $Vol_H$ le volume de la ou des premières chambres, $Vol_O$ le volume de la ou des deuxièmes chambres et $Vol_{air}$ le volume de l'enceinte, les débitmètres de gaz (régulateurs de débit) sont de préférence dimensionnés pour respecter le ratio :

$$\frac{Vol_H}{D_{H,max}} = \frac{Vol_O}{D_{O,max}} = \frac{Vol_{air}}{D_{air,max}}$$

Les moyens de commande et d'asservissement comprennent notamment un microprocesseur et des régulateurs PID (acronyme pour « Proportionnel Intégral Dérivé »).

Les moyens de chauffage des différentes lignes de gaz humides sont notamment des cordons chauffants régulés en température.

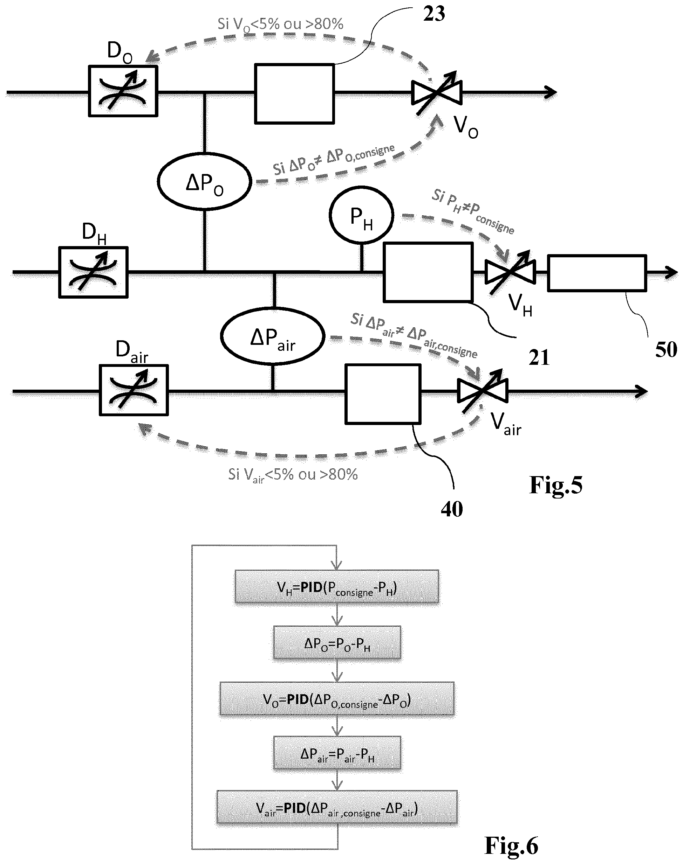

On se réfère maintenant à la figure 5 qui explicite un exemple de boucles de régulation mises en oeuvre automatiquement par un système selon l'invention.

Au préalable, un opérateur chargé du fonctionnement du système définit des consignes de fonctionnement.

Les boucles de régulation selon l'invention consistent successivement à :

- réguler en amont de l'empilement 20 le débit de gaz constitué d'un mélange de vapeur d'eau et d'hydrogène $D_H$ défini par l'opérateur de façon à garantir la stabilité du point de fonctionnement des cellules à oxydes solides;
- réguler en amont de l'empilement 20 le débit d'air $D_O$ défini par l'opérateur de façon à garantir la stabilité du point de fonctionnement des cellules à oxydes solides;
- réguler en amont de l'enceinte 40 le débit d'air $D_{air}$ défini par l'opérateur de façon à garantir la sécurité du système;
- réguler sur une consigne opérateur $P_{consigne}$, la pression des chambres d'hydrogène 21 grâce à la vanne de régulation $V_H$ en aval de l'empilement 20 ;
- réguler sur une consigne opérateur $\Delta P_{O,consigne}$, l'écart de pression entre chambres d'oxygène 23 et d'hydrogène 21, $\Delta P_O = (P_O - P_H)$ grâce à la vanne de régulation $V_O$ placée en aval de l'empilement 20 ;
- réguler sur une consigne opérateur $\Delta P_{air,consigne}$, l'écart de pression entre l'enceinte 40 et les chambres d'hydrogène 21, $\Delta P_{air} = (P_{air} - P_H)$ grâce à la vanne de régulation Vair en sortie de l'enceinte 40 ;
- ajuster périodiquement selon un pas de 10% le débit d'oxygène $D_O$ si la vanne $V_O$ se ferme à moins de 5% ou s'ouvre à plus de 80%;
- ajuster périodiquement selon un pas de 10% le débit d'air $D_{air}$ si la vanne $V_{air}$ se ferme à moins de 5% ou s'ouvre à plus de 80%.

A titre d'exemple, les consignes définies par l'opérateur peuvent être les suivantes :

- débit de vapeur d'eau/hydrogène $D_H$ dans la gamme de 0 à 10 1/h;
- débit d'air $D_O$ dans la gamme de 0 à 101/h ;
- débit d'air $D_{air}$ dans la gamme de 0 à 100 1/h ;
- $P_{consigne}$ dans la gamme de la pression atmosphérique à 30 bars ;
- $\Delta P_{O,consigne}$ dans la gamme de -100 à 100mbars, de préférence 50mbars ; .
- $\Delta P_{air,consigne}$ dans la gamme de -100 à + 100mbars, de préférence 50mbars pour éviter la fuite d'hydrogène dans l'enceinte 40 sous pression.

La figure 6 donne l'ordre et le détail des régulations des vannes $V_O$, $V_H$ mises en oeuvre par des modules PID :

- asservir la vanne de régulation $V_H$ par rapport à l'écart ($P_{consigne}$-$P_H$) ;
- calculer la pression différentielle $\Delta P_O = (P_O$-$P_H)$ ;
- asservir la vanne de régulation $V_O$ par rapport à l'écart ($\Delta P_O$-$\Delta P_{O,consigne}$);
- calculer la pression différentielle $\Delta P_{air} = (P_{air}$-$P_H)$ ;
- asservir la vanne de régulation $V_O$ par rapport à l'écart ($\Delta P_O$-$\Delta P_{O,consigne}$).

Les inventeurs ont mis en oeuvre l'invention dans un réacteur d'électrolyse conforme à la demande de brevet déposée en France le 18 décembre 2014 sous le n° FR 14 62699.

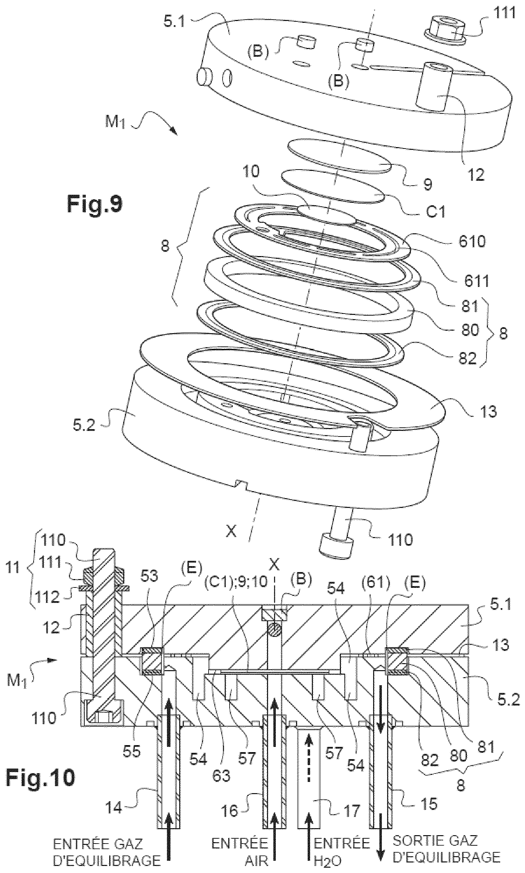

La description détaillée d'un tel réacteur à un ou plusieurs modules M1, M2 est reprise plus loin en référence aux figures 9 à 18.

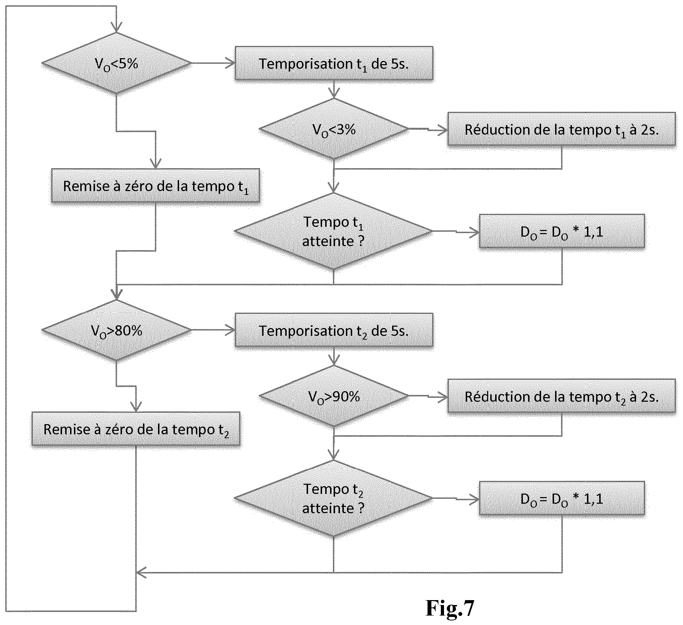

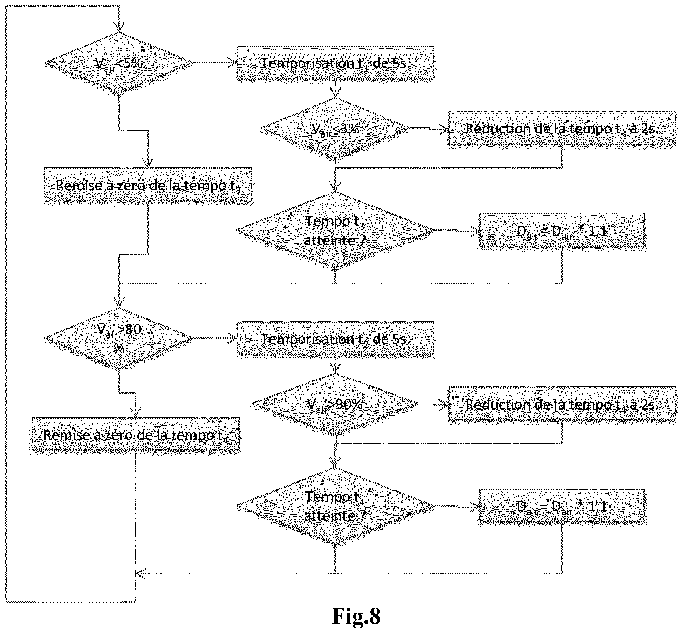

Les figures 7 et 8 fournissent des valeurs numériques correspondant à la mise en oeuvre de l'invention dans un tel réacteur.

Plus précisément, la figure 7 donne le détail de la boucle de régulation du débit d'oxygène $D_O$ en fonction de l'état d'ouverture de la vanne de régulation $V_O$ :

- si $V_O$<5% pendant 5 secondes, alors $D_O$ est augmenté de 10% ;
- si $V_O$<3% pendant 2 secondes, alors $D_O$ est augmenté de 10% ;
- si $V_O$>80% pendant 5 secondes, alors $D_O$ est diminué de 10% ;
- si $V_O$>90% pendant 2 secondes, alors $D_O$ est diminué de 10%.

La figure 8 donne le détail de la boucle de régulations du débit Dair en fonction de l'état d'ouverture de la vanne Vair :

- si $V_{air}$ <5% pendant 5 secondes, alors $D_{air}$ est augmenté de 10% ;
- si $V_{air}$<3% pendant 2 secondes, alors $D_{air}$ est augmenté de 10% ;
- si $V_{air}$>80% pendant 5 secondes, alors $D_{air}$ est diminué de 10% ;
- si $V_{air}$>90% pendant 2 secondes, alors $D_{air}$ est diminué de 10%.

Le module M1 du réacteur d'électrolyse comporte une cellule (C1) électrochimique élémentaire de forme axisymétrique autour d'un axe central X, la cellule étant formée d'une cathode, d'une anode, et d'un électrolyte intercalé entre la cathode et l'anode, deux interconnecteurs électrique et fluidique 5.1, 5.2 de part et d'autre de la cellule.

Les deux interconnecteurs 5.1, 5.2 sont réalisés chacun en une seule pièce métallique, de préférence en acier ferritique à environ 20% de chrome, de préférence en CROFER® 22APU ou le F18TNb, ou à base Nickel de type Inconel® 600 ou Haynes®.

L'interconnecteur supérieur 5.1 est percé d'un conduit 50 d'amenée de la vapeur d'eau, débouchant selon l'axe central sur la cellule du côté de la cathode. Comme expliqué par la suite, il est prévu une distribution radiale de la vapeur d'eau amenée et de l'hydrogène produit jusqu'à un conduit 59 de récupération de l'hydrogène produit, débouchant parallèlement à l'axe central à la périphérie de la cellule du côté de la cathode.

L'interconnecteur inférieur 5.2 est percé d'un conduit 51 d'amenée de gaz drainant, tel que l'air, débouchant selon l'axe central sur la cellule du côté de l'anode. Comme expliqué par la suite, il est prévu une distribution radiale de l'air amené et de l'oxygène produit jusqu'à un conduit 54 de récupération de l'oxygène produit, débouchant parallèlement à l'axe central à la périphérie de la cellule du côté de l'anode.

Un premier joint d'étanchéité 61 de forme axisymétrique autour de l'axe central X, est agencé à la périphérie de la cellule élémentaire C1 et en appui à la fois contre chacun des deux interconnecteurs. Ce joint est prévu pour réaliser l'étanchéité autour du compartiment cathodique.

Un deuxième joint d'étanchéité 63 de forme axisymétrique autour de l'axe central, est agencé à la périphérie de l'anode de la cellule élémentaire et en appui à la fois contre l'interconnecteur inférieur et contre l'électrolyte. Ce joint est prévu pour réaliser l'étanchéité autour du compartiment anodique. Les joints d'étanchéité 61 et 63 sont à base de verre et/ou de vitrocéramique, comme détaillé plus loin.

Un dispositif d'isolation électrique et d'étanchéité 8 de forme axisymétrique autour de l'axe central X est agencé à la périphérie du premier joint d'étanchéité autour du compartiment cathodique.

Le dispositif 8 est constitué d'une rondelle 80 isolante électriquement formant une cale, enserrée par des troisième et quatrième joints d'étanchéité métalliques 81, 82 sans contact l'un avec l'autre. Chacun de ces troisième et quatrième joints 81, 82 est métallique et en appui respectivement contre l'interconnecteur supérieur et inférieur.

L'interconnecteur inférieur 5.2 est percé d'au moins un conduit d'amenée 58 d'un gaz, dit gaz d'équilibrage, et d'au moins un conduit de récupération 58 de ce gaz d'équilibrage débouchant sur l'espace annulaire E délimité entre le joint 61 et le dispositif 8 de sorte à réaliser une distribution annulaire du gaz d'équilibrage afin d'équilibrer les pressions de part et d'autre du premier joint d'étanchéité 61 lors du fonctionnement.

Le dispositif 8 est adapté pour résister à un différentiel de pressions important entre la pression du gaz d'équilibrage, que l'on amène grâce à la régulation selon l'invention à la valeur la plus proche possible de la pression de fonctionnement du réacteur EHT, typiquement de 10 à 30 bars et la pression extérieure au module, typiquement 1 bar. La rondelle isolante 80 permet d'éviter tout court-circuit entre l'interconnecteur inférieur 5.2 et l'interconnecteur supérieur 5.1. Enfin, les joints métalliques sont adaptés pour présenter des dilatations compatibles avec les matériaux des interconnecteurs, notamment les interconnecteurs à base d'acier inoxydable ferritique.

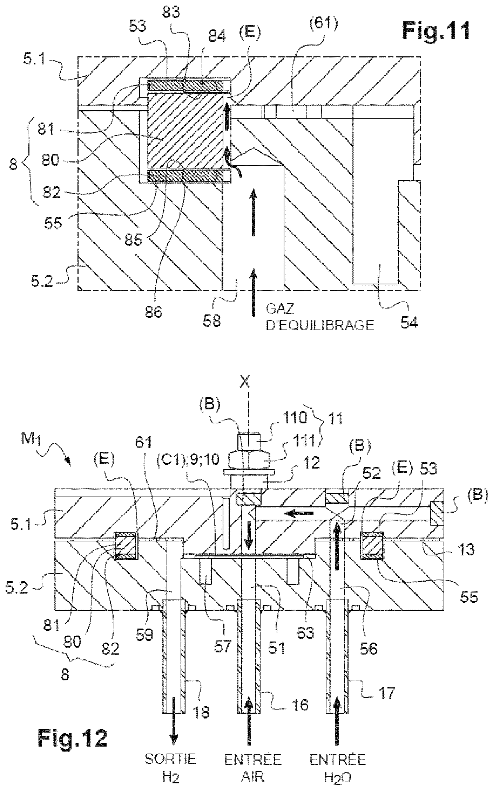

En plus de ce qui a déjà été décrit, l'interconnecteur supérieur 5.1 est percé d'un conduit d'amenée latéral 52 débouchant dans le conduit 50 d'amenée central, comme visible en figure 12. L'interconnecteur supérieur comprend également une gorge annulaire 53 pour recevoir le joint métallique supérieur 81 et la cale isolante 80 (figures 10 et 11).

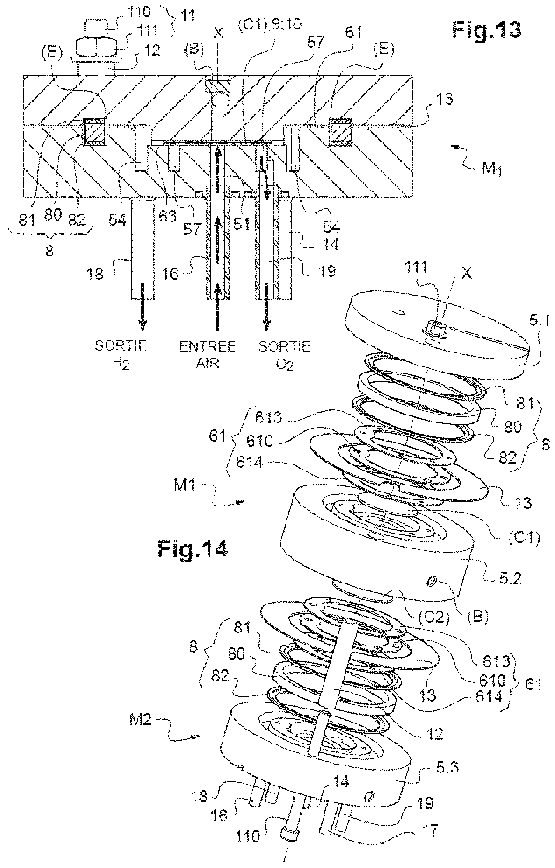

L'interconnecteur inférieur 5.2 comporte quant à lui une portée sur laquelle est positionnée à la fois le deuxième joint 63 et la cellule élémentaire. De la périphérie immédiate de la cellule vers l'extérieur, l'interconnecteur inférieur 5.2 comprend une gorge annulaire 54 pour l'écoulement radial du mélange $H_2O/H_2$, une surface plane et une autre gorge annulaire 55 concentrique de celle autour de la cellule pour recevoir le dispositif d'étanchéité 8. La surface plane est percée d'un conduit d'amenée latéral destiné à être en communication avec le conduit d'amenée central 51 de l'interconnecteur supérieur 5.1, comme visible en figure 13.

Comme visible en figure 14, la surface plane de l'interconnecteur inférieur sert de support au joint 61 et autour du conduit d'amenée latéral 56. Le joint 61 est constitué d'une couronne en mica 610 entre deux rondelles ou couronnes 613, 614 en vitrocéramique par ailleurs chacune en appui respectivement avec le premier 5.1 et le deuxième 5.2 interconnecteurs.

Comme visible aux figures 10 et 11, l'interconnecteur inférieur est percé d'une gorge annulaire 55 débouchant dans les conduits d'amenée 58 et de récupération 58 du gaz d'équilibrage.

Chacun de ces conduits d'amenée 58 et de récupération 58 du gaz d'équilibrage débouche dans la gorge 55 de logement du dispositif d'étanchéité 8 (figures 10 et 11). Selon l'invention, on prévoit un jeu de montage latéral du dispositif d'étanchéité 8 dans les gorges 53, 55 respectivement de l'interconnecteur supérieur 5.1 et inférieur 5.2, qui est suffisant pour permettre le passage du gaz d'équilibrage dans l'espace annulaire (E) ainsi défini entre dispositif 8 et l'intérieur des gorges 53, 55. Comme on peut le voir en détail en figure 11, c'est le passage réalisé en fond de perçage du conduit d'amenée 58 à l'intérieur du dispositif d'étanchéité 8 qui permet l'arrivée du gaz d'équilibrage dans l'espace annulaire (E) et ainsi d'assurer la distribution annulaire de ce dernier. En quelque sorte, cette distribution annulaire du gaz d'équilibrage forme un rideau périphérique de gaz autour des compartiments de gaz réactifs, ce qui permet d'équilibrer les pressions.

Grâce à la présence des gorges 54, 57 de distribution des gaz réactifs sur l'interconnecteur inférieur 5.2, le module selon l'invention avec les deux interconnecteurs et la cellule en géométrie axisymétrique autour de l'axe X permet une alimentation homogène et radiale de la cellule en gaz réactifs quel que soit le niveau de pression.

Comme illustré en figure 9, un module M1 d'électrolyse peut comporter avantageusement des grilles de contact électrique 9, 10 qui peuvent notamment avoir pour effet de compenser des défauts de planéité afin d'obtenir un meilleur contact électrique entre d'une part l'interconnecteur supérieur et la cathode et d'autre part entre l'interconnecteur inférieur et l'anode.

Avantageusement, comme visible en figure 9, le module M1 peut comprendre, à la périphérie du dispositif d'isolation et d'étanchéité 8, une couronne 13 isolante électriquement, du type en mica, la couronne 13 venant en appui sur toutes les zones où les deux surfaces périphériques des interconnecteurs 5.1 et 5.2 sont en regard l'une de l'autre.

On a représenté aux figures 14 à 18, un réacteur d'électrolyse EHT comportant deux modules M1, M2 réalisés chacun comme celui décrit précédemment, empilés l'un sur l'autre.

Dans ce réacteur, l'interconnecteur inférieur 5.2 du module supérieur M1 et l'interconnecteur supérieur 5.2 du module inférieur M2 sont réalisés dans le même composant en alliage métallique.

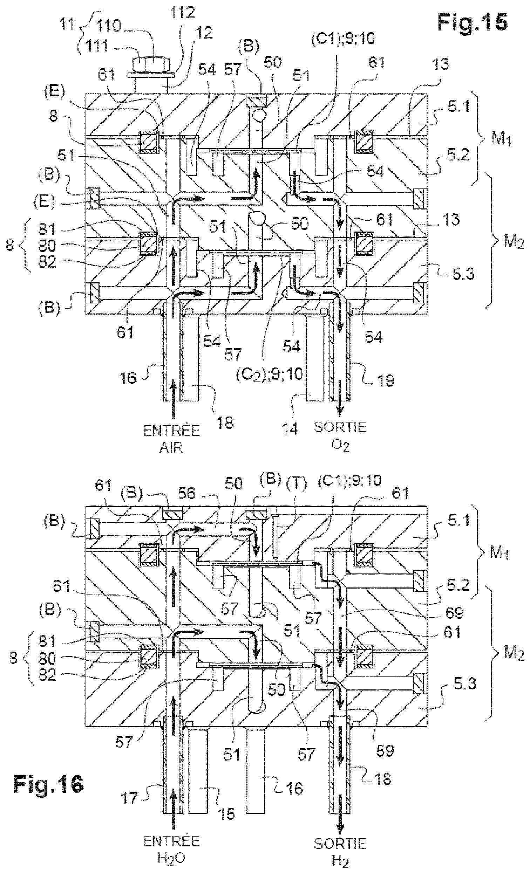

Comme on peut le voir sur les figures 15 et 16, les différents perçages verticaux et horizontaux au travers des interconnecteurs 5.1 à 5.3 superposés, permettent de réaliser à la périphérie puis selon l'axe central X les conduits d'amenée respectivement d'air 51 (figure 15) et de vapeur d'eau 56, 50 (figure 16), et à la périphérie pour les conduits de récupération respectivement 54 de l'oxygène produit et 59 de l'hydrogène, pour chaque cellule d'électrolyse C1, C2.

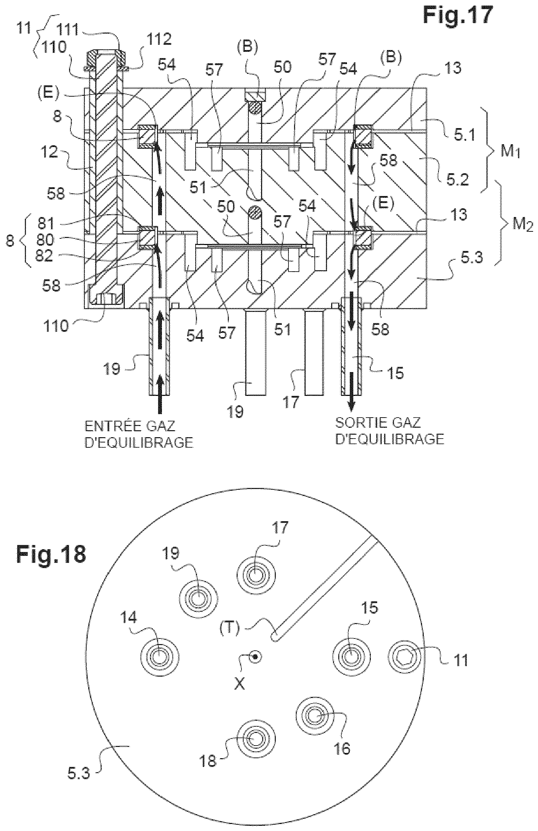

Comme on peut le voir sur la figure 17, les différents perçages verticaux au travers des interconnecteurs 5.1 à 5.3 superposés, permettent de réaliser à la périphérie les conduits d'amenée et de récupération 58 du gaz d'équilibrage autour de chaque cellule d'électrolyse C1, C2.

Selon un mode de réalisation avantageux, le module ou le réacteur selon l'invention intègre un boulon 11 monté traversant dans des logements réalisés dans les interconnecteurs. Comme visible en figures 10 et 17, la tête 110 du boulon 11 traversant repose dans un logement d'un interconnecteur d'extrémité 5.2 ou 5.3 et un écrou 111 vissé sur le boulon traversant fait saillie sur l'autre interconnecteur d'extrémité 5.1, l'écrou 111 étant en appui indirectement par le biais d'une rondelle 112 sur un manchon 12 isolant électrique monté dans le logement de l'interconnecteur supérieur 5.2 ou 5.1. Le boulon 11 interdit l'ouverture intempestive de chaque module lors du fonctionnement sous pression, ce qui assure une sécurité de fonctionnement mais pas le serrage par compression de chaque cellule entre les interconnecteurs. Le serrage, garant de l'étanchéité et du contact électrique est par ailleurs réalisé en appliquant un effort de compression bien adapté d'un interconnecteur sur l'autre. Les chaines de côtes de tous les composants des modules sont déterminées pour garantir un écrasement des joints d'étanchéité 81, 82 en périphérie, ainsi que celui éventuel des grilles de contact électrique 9, 10. Typiquement, l'écrasement réalisé par serrage est de quelques dizaines de microns. Bien entendu, on veille à ce que l'effort de serrage par compression soit ajusté lors de la montée en pression à l'intérieur du module selon l'invention.

Enfin, plusieurs tuyaux sont connectés aux différents conduits d'amenée et de récupération des gaz réalisés dans les interconnecteurs de la façon suivante :

- un tuyau d'amenée latérale 14 du gaz d'équilibrage est connecté sur le conduit d'amenée latérale 58 de l'interconnecteur inférieur 5.2 ou 5.3, tandis qu'un tuyau de récupération 15 du gaz d'équilibrage est connecté sur le conduit de récupération latérale 58 de l'interconnecteur inférieur (figures 10, 17 et 18) ;
- un tuyau d'amenée centrale de l'air 16 est connecté sur le conduit d'amenée central de l'interconnecteur inférieur 5.2 ou 5.3 (figures 12, 13, 15 et 18), tandis qu'un tuyau de récupération 19 de l'oxygène produit est connecté sur la gorge annulaire 57 de l'interconnecteur inférieur 5.2 ou 5.3 (figures 12, 13, 15 et 18) ;
- un tuyau d'amenée centrale de la vapeur d'eau 17 est connecté sur le conduit d'amenée latéral de l'interconnecteur inférieur 5.2 ou 5.3 lui-même débouchant sur celui de l'interconnecteur supérieur 5.1 (figures 13, 16 et 18), tandis qu'un tuyau de récupération 18 de l'hydrogène produit est connecté sur le conduit de récupération latérale 59 de l'interconnecteur inférieur (figures 13, 16 et 18).

On décrit maintenant le fonctionnement d'un réacteur d'électrolyse EHT comprenant plusieurs modules selon l'invention qui viennent d'être décrits, les modules étant empilés les uns sur les autres, comme celui représenté aux figures 14 à 18.

On alimente le tuyau 17 en vapeur d'eau et donc les conduits d'amenée en vapeur d'eau 56, 52 et 50 et simultanément le tuyau 14 en gaz d'équilibrage et donc le conduit d'amenée 58 et l'espace annulaire E, la pression de la vapeur d'eau amenée étant sensiblement égale à celle du gaz d'équilibrage.

Simultanément également, on alimente le tuyau 16 en air, en tant que gaz drainant, et donc le conduit d'amenée 51, la pression de l'air amené étant sensiblement égale à celle du gaz d'équilibrage.

La vapeur d'eau distribuée radialement depuis le conduit d'amenée 50 et l'hydrogène produit par l'électrolyse de la vapeur d'eau, circule dans la gorge annulaire 54 puis est récupéré radialement dans le conduit de récupération 59 et donc par le tuyau de récupération 18 (figures 12 et 16).

Le gaz d'équilibrage circule dans l'espace annulaire E et est récupéré dans le conduit de récupération 58 et donc par le tuyau de récupération 15 (figures 10 et 17).

L'air distribué radialement depuis le conduit d'amenée 51 et l'oxygène produit par l'électrolyse de la vapeur d'eau circule radialement dans la gorge annulaire 57 puis est récupéré par le tuyau de récupération 19 (figures 13 et 15).

Dans le module M1 ou le réacteur à empilement de modules M1, M2 selon l'invention, aucun courant d'alimentation ne traverse l'ensemble des tuyaux 14 à 19.

D'autres variantes et avantages de l'invention peuvent être réalisés sans pour autant sortir du cadre de l'invention défini par les revendications jointes.

L'invention n'est pas limitée aux exemples qui viennent d'être décrits ; on peut notamment combiner entre elles des caractéristiques des exemples illustrés au sein de variantes non illustrées.

**Références citées**

[1] : « Expérimental investigation of the effect of operating pressure on the performance of SOFC and SOEC », A. Momma, K. Takano, Y. Takana, T.Kato, A. Yamamoto. ECS Transactions, vol. 57, no. 1, pages 699-708, 06 octobre 2013 (2013-10-06), XP055260100, ISSN : 1938-6737, DOI: 10.1149/05701.0699ecst

[2] : « High Temperature Electrolysis Pressurized Experiment Design, Operation, and Results », J.E. O'Brien, X Zhang, G. K. Housley, K. DeWall, L. Moore-McAteer, G. Tao, 13 septembre 2012 (2012-09-13), Idaho National Laboratory, INL/EXT-12-26891, XP055260106. Extrait de l'Internet : URL : https://inldigitallibrary.inl.gov/sites/sti/sti/5516323.pdf

[3] : « A validated multi-scale model of a SOFC stack at elevated pressure », M. Henke, C. Willich, C. Westner, F. Leucht, J. Kallo, W. G. Bessler and K. A. Friedrich, Fuel Cells, vol. 13, no. 5, pages 773-780, 30 août 2013 (2013-08-30), XP055260109, ISSN: 1615-6846, DOI: 10.1002/fuce.201300076,

[4] : « An experimental investigation of pressurized planar solid oxide fuel cells using two différent flow distributors», H.W. Chang, C.M. Huang, S.S. Shy, Journal of Power Sources, vol. 250, pages 21-29, 15 mars 2014 (2014-03-15), XP055260114, ISSN : 0378-7753, DOI: 10.1016/ j.jpowsour.2013.10.127,

[5] : « Pressurized testing of a planar solid oxide fuel cell stack », A. A. Burke, L. G. Carreiro, J. R. Izzo Jr., International Journal of Hydrogen Energy, vol. 38, no. 31, pages 13774-13780, 10 septembre 2013 (2013-09-10), XP028730762, ISSN: 0360-3199, DOI: 10.1016/ J.IJHYDENE.2013.08.058,

[6] : « Hydrogen and synthetic fuel production using pressurized solid oxide electrolysis cells », S. Hojgaard Jensen, X. Sun, S. Dalgaard Ebbesen, R. Knibbe, M. Mogensen, International Journal of Hydrogen Energy, vol. 35, no. 18, 24 juillet 2010 (2010-07-24), pages 9544-9549, XP027235608, ISSN: 0360-3199,

[7] : « Pressurized solid oxide fuel cells: Experimental studies and modeling», S. Seidler, M. Henkea, J. Kalloa, W. G. Besslera, U. Maierb, A. Friedrich, Journal of Power Sources, vol. 196, no. 17, 7 octobre 2010 (2010-10-07), pages 7195-7202, XP055260130, CH, ISSN: 0378-7753, DOI: 10.1016/j.jpowsour.2010.09.100

## Revendications

1. Système comportant :

 - au moins une première chambre (21) dans laquelle un premier gaz, qui est un gaz potentiellement humide, est apte à circuler;
 - au moins une première ligne d'alimentation apte à alimenter en gaz potentiellement humide, l'entrée de la première chambre jusqu'à une pression maximale de fonctionnement $P_{max}$, la première ligne d'alimentation comprenant un premier régulateur de débit apte à réguler le débit du premier gaz $D_H$ entre une valeur nulle et une valeur maximale $D_{H,max}$ :

 - au moins une deuxième chambre (23) dans laquelle un deuxième gaz est apte à circuler ;
 - au moins une deuxième ligne d'alimentation apte à alimenter en deuxième gaz l'entrée de la deuxième chambre, la deuxième ligne d'alimentation comprenant un deuxième régulateur de débit apte à réguler le débit du deuxième gaz $D_O$ entre une valeur nulle et une valeur maximale $D_{O,max}$;
 - une enceinte (40) dans laquelle les première et deuxième chambres sont logées, dans laquelle un troisième gaz, dit gaz d'équilibrage, est apte à circuler, l'enceinte étant apte à fonctionner sous pression du gaz d'équilibrage jusqu'à la pression maximale de fonctionnement $P_{max}$;
 - une troisième ligne d'alimentation apte à alimenter l'intérieur de l'enceinte en gaz d'équilibrage, de préférence de l'air, la troisième ligne d'alimentation comprenant un troisième régulateur de débit apte à réguler le débit du gaz d'équilibrage $D_{air}$ entre une valeur nulle et une valeur maximale $D_{air,max}$;
 - des capteurs de pression ($P_H$, $P_O$, $P_{air}$), aptes à mesurer la pression dans chacune des première et deuxième chambres et dans l'enceinte, entre la pression atmosphérique et la valeur de pression maximale $P_{max}$ ;
 - au moins trois vannes de régulation ($V_H$, $V_O$, $V_{air}$), agencées à l'extérieur de l'enceinte et respectivement sur la ligne de sortie de la ou des premières chambres, de la ou des deuxièmes chambres et de l'enceinte, chaque vanne étant apte à fonctionner chacune à une température supérieure à la température de condensation du gaz humide à la pression maximale $P_{max}$ considérée, chaque vanne étant apte à être ouverte de 0% à 100% et présentant une capacité $K_v$ adaptée à la pression maximale $P_{max}$ et au débit moyen du gaz considéré sur chacune des trois lignes de sortie;
 - des moyens de chauffage des lignes contenant le gaz humide à une température supérieure à la température de condensation de ce gaz humide à la pression maximale $P_{max}$ considérée ;
 - des moyens de commande et d'asservissement pour commander et asservir les vannes de régulation ($V_H$, $V_O$, $V_{Air}$) en fonction des différences de valeurs de pression mesurées par les capteurs de pression de sorte à obtenir une différence minimale de pression entre la ou les premières chambres, la ou les deuxièmes chambres et l'enceinte ;

 système **caractérisé en ce que,** en incluant le volume des lignes de circulation de gaz en amont et en aval de l'enceinte et des chambres, soit $Vol_H$ le volume de la ou des premières chambres, $Vol_O$ le volume de la ou des deuxièmes chambres et $Vol_{air}$ le volume de l'enceinte, les régulateurs de débit sont dimensionnés pour respecter le ratio :

$$\frac{\text{Vol}_H}{D_{H,max}} = \frac{\text{Vol}_O}{D_{O,max}} = \frac{\text{Vol}_{air}}{D_{air,max}}.$$

2. Système selon la revendication 1, un condenseur (50) du gaz humide, agencé en aval de la vanne de régulation $V_H$, sur la ligne de sortie de la ou des premières chambres.

3. Système selon la revendication 1 ou 2, les moyens de commande et d'asservissement étant aptes en outre à commander et asservir les régulateurs de débit du deuxième gaz $D_O$ et du gaz d'équilibrage $D_{Air}$ en fonction de l'état d'ouverture des vannes de régulation du deuxième gaz $V_O$ et du gaz d'équilibrage $V_{Air}$, afin d'éviter les états d'ouverture ou de fermeture complète des vannes du deuxième gaz Vo et du gaz d'équilibrage $V_{Air}$.

**4.** Système selon l'une des revendications 1 à 3, comprenant un réacteur d'électrolyse ou de co-électrolyse à haute température (EHT) comprenant un empilement (20) de cellules d'(de co-)électrolyse élémentaires à oxydes solides comprenant chacune une anode, une cathode, et un électrolyte intercalé entre l'anode et la cathode, les cellules étant connectées électriquement en série, l'empilement comprenant deux bornes électriques pour l'alimentation en courant des cellules et définissant des chambres de circulation de vapeur d'eau et d'hydrogène ou de vapeur d'eau, d'hydrogène et dioxyde de carbone ($CO_2$) sur les cathodes en tant que premières chambres et, des chambres de circulation en air ou en azote ou en oxygène ou un mélange de gaz contenant de l'oxygène sur les anodes en tant que deuxièmes chambres.

**5.** Système selon l'une des revendications 1 à 3, comprenant une pile à combustible (SOFC) à haute température comprenant un empilement (20) de cellules électrochimiques élémentaires à oxydes solides comprenant chacune une anode, une cathode, et un électrolyte intercalé entre l'anode et la cathode, les cellules étant connectées électriquement en série, l'empilement comprenant deux bornes électriques pour la récupération en courant des cellules et définissant des chambres de circulation en dihydrogène ou un autre gaz combustible ou un mélange contenant un gaz combustible sur les anodes en tant que premières chambres et des chambres de circulation en air ou en azote ou en oxygène ou un mélange de gaz contenant de l'oxygène sur les cathodes en tant que deuxièmes chambres.

**6.** Système selon l'une des revendications précédentes, comprenant au moins trois capteurs de pression absolue $P_O$, $P_{air}$), aptes à mesurer chacun la pression respectivement dans chacune des première chambres, dans chacune des deuxième chambres et dans l'enceinte.

**7.** Système selon l'une des revendications 1 à 5, comprenant au moins un capteur de pression absolue $P_H$, apte à mesurer chacun la pression dans chacune des première chambres, et comprenant au moins deux capteurs de pression différentiels aptes à mesurer respectivement la différence de pression entre la ou les deuxième chambres et la ou les première chambres $\Delta P_O = (P_O - P_H)$ et entre l'enceinte et la ou les première chambres $\Delta P_{air} = (P_{air} - P_H)$.

**8.** Système selon l'une des revendications précédentes, comprenant en outre des vannes de by-pass $V_{H,bypass}$, $V_{O,bypass}$ et $V_{air,bypass}$ agencées chacune en parallèle respectivement des vannes de régulation $V_H$, Vo et $V_{air}$.

**9.** Procédé de fonctionnement du système selon l'une des revendications précédentes, comprenant les étapes suivantes :

a/ définir les consignes de fonctionnement suivantes:

a1/ définir un débit $D_H$ qui correspond à la quantité de gaz potentiellement humide nécessaire pour un point de fonctionnement électrochimique prédéterminé;

a2/ définir un débit $D_O$ qui correspond à la quantité de deuxième gaz nécessaire pour un point de fonctionnement électrochimique prédéterminé;

a3/ définir un débit $D_{air}$ qui correspond à la quantité de deuxième gaz nécessaire pour assurer la détection et la sécurité vis-à-vis des fuites et éviter la formation d'une atmosphère explosive dans l'enceinte;

a4/ définir une pression $P_{consigne}$ pour le point de fonctionnement prédéterminé ;

a5/ définir la pression différentielle $\Delta P_{O,consigne}$ correspondant à l'écart de pressions entre celle régnant dans la ou les deuxièmes chambres et celle dans la ou les premières chambres;

a6/ définir la pression différentielle $\Delta P_{air,consigne}$ correspondant à l'écart de pressions entre celle dans l'enceinte et celle régnant dans la ou les premières chambres ;

b/ appliquer les régulations suivantes:

b1/ actionner le (ou les) régulateur(s) de débit de gaz humide, afin de réguler le débit $D_H$ du gaz humide ;

b2/ actionner le (ou les) régulateur(s) de débit de deuxième gaz, afin de réguler le débit $D_O$ entrant dans la ou les secondes chambres;

b3/ actionner le (ou les) régulateur(s) de débit du gaz d'équilibrage, afin de réguler le débit $D_{air}$ entrant dans l'enceinte;

b4/ actionner la vanne de régulation $V_H$ du gaz humide pour réguler la pression $P_H$ réelle de la ou des premières chambres sur la valeur de consigne $P_{consigne}$ ;

b5/ actionner la vanne Vo du deuxième gaz de sorte que la pression différentielle réelle entre la ou les deuxièmes chambres et la ou les premières chambres $\Delta P_O = (P_O - P_H)$, soit régulée en fonction de l'erreur mesurée par rapport à la consigne ($\Delta P_{O,consigne} - \Delta P_O$), afin que la pression $P_O$ du deuxième gaz suive celle $P_H$ de la ou des premières chambres avec la pression différentielle de consigne $\Delta P_{O,consigne}$;

b6/ actionner la vanne $V_{air}$ du gaz d'équilibrage de sorte que la pression différentielle réelle entre l'enceinte et la ou les premières chambres $\Delta P_{air}=(P_{air}-P_H)$, soit régulée en fonction de l'erreur mesurée par rapport à la consigne ($\Delta P_{air,consigne}-\Delta P_{air}$), afin que la pression $P_{air}$ du gaz d'équilibrage de l'enceinte suive à celle $P_H$ de la ou des premières chambres avec la pression différentielle de consigne $\Delta P_{air,consigne}$.

10. Procédé de fonctionnement selon la revendication 9, comprenant en outre une étape d'augmentation de débit du deuxième gaz $D_O$ et du gaz d'équilibrage $D_{Air}$ si les vannes de régulation respectivement du deuxième gaz $V_O$ et du gaz d'équilibrage $V_{Air}$, sont proches d'un état de fermeture complète.

11. Procédé de fonctionnement selon la revendication 9, comprenant en outre une étape de diminution de débit du deuxième gaz $D_O$ et du gaz d'équilibrage $D_{Air}$ si les vannes de régulation respectivement du deuxième gaz Vo et du gaz d'équilibrage $V_{Air}$, sont proches d'un état d'ouverture complète.

**Patentansprüche**

1. System, aufweisend:

   - mindestens eine erste Kammer (21), in der ein erstes Gas, das ein potenziell feuchtes Gas ist, zirkulieren kann;
   - mindestens eine erste Versorgungsleitung, die geeignet ist, den Eingang der ersten Kammer mit potenziell feuchtem Gas bis zu einem maximalen Betriebsdruck $P_{max}$ zu versorgen, wobei die erste Versorgungsleitung einen ersten Volumenstromregler umfasst, der geeignet ist, den Volumenstrom des ersten Gases $D_H$ zwischen einem Wert null und einem Maximalwert $D_{H,max}$ zu regeln;
   - mindestens eine zweite Kammer (23), in der ein zweites Gas zirkulieren kann;
   - mindestens eine zweite Versorgungsleitung, die geeignet ist, den Eingang der zweiten Kammer mit zweitem Gas zu versorgen, wobei die zweite Versorgungsleitung einen zweiten Volumenstromregler umfasst, der geeignet ist, den Volumenstrom des zweiten Gases $D_O$ zwischen einem Wert null und einem Maximalwert $D_{O,max}$ zu regeln;
   - ein Gehäuse (40), in dem die erste und zweite Kammer aufgenommen sind, in dem ein drittes Gas, Ausgleichsgas genannt, zirkulieren kann, wobei das Gehäuse geeignet ist, unter dem Druck des Ausgleichsgases bis zum maximalen Betriebsdruck $P_{max}$ betrieben zu werden;
   - eine dritte Versorgungsleitung, die geeignet ist, den Innenraum des Gehäuses mit Ausgleichsgas, bevorzugt Luft, zu versorgen, wobei die dritte Versorgungsleitung einen dritten Volumenstromregler umfasst, der geeignet ist, den Volumenstrom des Ausgleichsgases $D_{air}$ zwischen einem Wert null und einem Maximalwert $D_{air,max}$ zu regeln;
   - Drucksensoren ($P_H$, $P_O$, $P_{air}$), die geeignet sind, den Druck in jeder der ersten und zweiten Kammern und im Gehäuse zwischen dem atmosphärischen Druck und dem maximalen Druckwert $P_{max}$ zu messen;
   - mindestens drei Regelventile ($V_H$, $V_O$, $V_{air}$), die außerhalb des Gehäuses und jeweils an der Ausgangsleitung der ersten Kammer oder Kammern, der zweiten Kammer oder Kammern und des Gehäuses angeordnet sind, wobei jedes Ventil geeignet ist, bei einer Temperatur oberhalb der Kondensationstemperatur des feuchten Gases beim betrachteten Maximaldruck $P_{max}$ betrieben zu werden, wobei jedes Ventil geeignet ist, von 0 % bis 100 % geöffnet zu sein, und eine Kapazität $K_V$ aufweist, die für den maximalen Druck $P_{max}$ und den mittleren Volumenstrom des betrachteten Gases an jeder der drei Ausgangsleitungen geeignet ist;
   - Mittel zum Beheizen der das feuchte Gas enthaltenden Leitungen auf eine Temperatur oberhalb der Kondensationstemperatur dieses feuchten Gases bei dem betrachteten maximalen Druck $P_{max}$;
   - Steuerungs- und Regelungsmittel, um die Regelventile ($V_H$, $V_O$, $V_{air}$) in Abhängigkeit von den von den Drucksensoren gemessenen Druckwertedifferenzen so zu steuern und zu regeln, dass eine minimale Druckdifferenz zwischen der oder den ersten Kammern, der oder den zweiten Kammern und dem Gehäuse erhalten wird;

wobei das System **dadurch gekennzeichnet ist, dass** unter Einbeziehung des Volumens der Gaszirkulationsleitungen stromauf und stromab des Gehäuses und der Kammern, wenn $Vol_H$ das Volumen der ersten Kammer oder Kammern ist, $Vol_O$ das Volumen der zweiten Kammer oder Kammern ist und $Vol_{air}$ das Volumen des Gehäuses ist, die Volumenstromregler so ausgelegt sind, dass das folgende Verhältnis eingehalten wird:

$$\frac{Vol_H}{D_{H,max}} = \frac{Vol_O}{D_{O,max}} = \frac{Vol_{air}}{Vol_{air,max}}.$$

**2.** System nach Anspruch 1, wobei ein Kondensator (50) des feuchten Gases stromab des Regelventils $V_H$ an der Ausgangsleitung der ersten Kammer oder Kammern angeordnet ist.

**3.** System nach Anspruch 1 oder 2, wobei die Steuerungs- und Regelungsmittel ferner geeignet sind, die Volumenstromregler des zweiten Gases $D_O$ und des Ausgleichsgases $D_{Air}$ in Abhängigkeit vom Öffnungszustand der Regelventile des zweiten Gases $V_O$ und des Ausgleichsgases $V_{Air}$ zu steuern und zu regeln, um die Zustände des vollständigen Öffnens oder Schließens der Ventile des zweiten Gases $V_O$ und des Ausgleichsgases $V_{Air}$ zu verhindern.

**4.** System nach einem der Ansprüche 1 bis 3, umfassend einen Hochtemperatur-Elektrolyse- oder Co-Elektrolyse-Reaktor (HTE), umfassend einen Stapel (20) aus elementaren Festoxid-(Co-)Elektrolysezellen, umfassend jeweils eine Anode, eine Kathode und einen zwischen der Anode und der Kathode eingefügten Elektrolyten, wobei die Zellen elektrisch in Reihe geschaltet sind, wobei der Stapel zwei elektrische Klemmen zur Stromversorgung der Zellen umfasst und Zirkulationskammern für Wasserdampf und Wasserstoff oder Wasserdampf, Wasserstoff und Kohlendioxid ($CO_2$) an den Kathoden als erste Kammern und Zirkulationskammern für Luft oder Stickstoff oder Sauerstoff oder ein sauerstoffhaltiges Gasgemisch an den Anoden als zweite Kammern definiert.

**5.** System nach einem der Ansprüche 1 bis 3, umfassend eine Hochtemperatur-Brennstoffzelle (SOFC), umfassend einen Stapel (20) aus elementaren elektrochemischen Festoxidzellen, umfassend jeweils eine Anode, eine Kathode und einen zwischen der Anode und der Kathode eingefügten Elektrolyten, wobei die Zellen elektrisch in Reihe geschaltet sind, wobei der Stapel zwei elektrische Klemmen zur Stromrückgewinnung aus den Zellen umfasst und Zirkulationskammern für Diwasserstoff oder ein anderes Brenngas oder ein brenngashaltiges Gemisch an den Anoden als erste Kammern und Zirkulationskammer für Luft oder Stickstoff oder Sauerstoff oder ein sauerstoffhaltiges Gasgemisch an den Kathoden als zweite Kammern definiert.

**6.** System nach einem der vorhergehenden Ansprüche, umfassend mindestens drei Absolutdrucksensoren ($P_H$, $P_O$, $P_{air}$), von denen jeder geeignet ist, den jeweiligen Druck in jeder der ersten Kammern, in jeder der zweiten Kammern und in dem Gehäuse zu messen.

**7.** System nach einem der Ansprüche 1 bis 5, umfassend mindestens einen Absolutdrucksensor $P_H$, von denen jeder geeignet ist, den Druck in jeder der ersten Kammern zu messen, und umfassend mindestens zwei Differentialdrucksensoren, die geeignet sind, die Druckdifferenz zwischen der oder den zweiten Kammern und der oder den ersten Kammern $\Delta P_O = (P_O - P_H)$ und zwischen dem Gehäuse und der oder den ersten Kammern $\Delta P_{air} = (P_{air} - P_H)$ zu messen.

**8.** System nach einem der vorhergehenden Ansprüche, umfassend ferner Bypassventile $V_{H,bypass}$, $V_{O,bypass}$ und $V_{air,bypass}$, die jeweils parallel zu den jeweiligen Regelventilen $V_H$, $V_O$ und $V_{air}$ angeordnet sind.

**9.** Verfahren zum Betreiben des Systems nach einem der vorhergehenden Ansprüche, umfassend die folgenden Schritte:

a/ Festlegen der folgenden Betriebssollwerte:

a1/ Festlegen eines Volumenstroms $D_H$, welcher der Menge des potenziell feuchten Gases entspricht, die für einen vorbestimmten elektrochemischen Betriebspunkt erforderlich ist;
a2/ Festlegen eines Volumenstroms $D_O$, welcher der Menge des zweiten Gases entspricht, die für einen vorbestimmten elektrochemischen Betriebspunkt erforderlich ist;
a3/ Festlegen eines Volumenstroms $D_{air}$, welcher der Menge des zweiten Gases entspricht, die erforderlich ist, um die Detektion und die Sicherheit gegenüber Leckagen zu gewährleisten und die Bildung einer explosionsfähigen Atmosphäre in dem Gehäuse zu verhindern;
a4/ Festlegen eines Drucks $P_{consigne}$ für den vorbestimmten Betriebspunkt;
a5/ Festlegen des Differenzdrucks $\Delta P_{O,consigne}$, welcher der Druckabweichung zwischen dem, der in der oder den zweiten Kammern herrscht, und dem in der oder den ersten Kammern entspricht;
a6/ Festlegen des Differenzdrucks $\Delta P_{air,consigne}$, welcher der Druckabweichung zwischen dem im Gehäuse und dem, der in der oder den ersten Kammern herrscht, entspricht;

b/ Anwenden der folgenden Regelungen:

b1/ Betätigen des (oder der) Volumenstromregler(s) für das feuchte Gas, um den Volumenstrom $D_H$ des feuchten Gases zu regeln;
b2/ Betätigen des (oder der) Volumenstromregler(s) für das zweite Gas, um den Volumenstrom $D_O$ zu regeln, der in die zweite Kammer oder Kammern eintritt;

b3/ Betätigen des (oder der) Volumenstromregler(s) für das Ausgleichsgas, um den Volumenstrom $D_{air}$ zu regeln, der in das Gehäuse eintritt;

b4/ Betätigen des Regelventils $V_H$ für das feuchte Gas, um den Istdruck $P_H$ der ersten Kammer oder Kammern auf den Sollwert $P_{consigne}$ zu regeln;

b5/ Betätigen des Ventils $V_O$ für das zweite Gas, so dass der Ist-Differenzdruck zwischen der oder den zweiten Kammern und der oder den ersten Kammern $\Delta P_O = (P_O - P_H)$ in Abhängigkeit von dem in Bezug auf den Sollwert gemessenen Fehler $(\Delta P_{O,consigne} - \Delta P_O)$ geregelt wird, damit der Druck $P_O$ des zweiten Gases dem $P_H$ der ersten Kammer oder Kammern mit dem Soll-Differenzdruck $\Delta P_{O,consigne}$ folgt;

b6/ Betätigen des Ventils $V_{air}$ für das Ausgleichsgas, so dass der Ist-Differenzdruck zwischen dem Gehäuse und der ersten Kammer oder Kammern $\Delta P_{air} = (P_{air} - P_H)$ in Abhängigkeit von dem in Bezug auf den Sollwert gemessenen Fehler $(\Delta P_{air,consigne} - \Delta P_{air})$ geregelt wird, damit der Druck $P_{air}$ des Ausgleichsgases des Gehäuses dem $P_H$ der ersten Kammer oder Kammern mit dem Soll-Differenzdruck $\Delta P_{air,consigne}$ folgt.

10. Betriebsverfahren nach Anspruch 9, umfassend ferner einen Schritt des Erhöhens des Volumenstroms des zweiten Gases $D_O$ und des Ausgleichsgases $D_{Air}$, wenn die Regelventile des zweiten Gases $V_O$ beziehungsweise des Ausgleichsgases $V_{Air}$ einem Zustand des vollständigen Schließens nahe sind.

11. Betriebsverfahren nach Anspruch 9, umfassend ferner einen Schritt des Verminderns des Volumenstroms des zweiten Gases $D_O$ und des Ausgleichsgases $D_{Air}$, wenn die Regelventile des zweiten Gases $V_O$ beziehungsweise des Ausgleichsgases $V_{Air}$ einem Zustand des vollständigen Öffnens nahe sind.

**Claims**

1. A system including:

   - at least one first chamber (21) in which a first gas, which is a potentially wet gas, is suitable for circulating;
   - at least one first feed line that is suitable for feeding potentially wet gas to the inlet of the first chamber up to a maximum operating pressure $P_{max}$, the first feed line comprising a first flow rate regulator suitable for regulating the flow rate of the first gas $D_H$ between a zero value and a maximum value $D_{H,max}$:

      - at least one second chamber (23) in which a second gas is suitable for circulating;
      - at least one second feed line suitable for feeding second gas to the inlet of the second chamber, the second feed line comprising a second flow rate regulator suitable for regulating the flow rate of the second gas Do between a zero value and a maximum value $D_{O,max}$;
      - an enclosure (40) in which the first and second chambers are housed, in which enclosure a third gas, called an equalizing gas, is suitable for circulating, the enclosure being suitable for operating under pressure of the equalizing gas up to the maximum operating pressure $P_{max}$;
      - a third feed line suitable for feeding the inside of the enclosure with equalizing gas, preferably air, the third feed line comprising a third flow rate regulator suitable for regulating the flow rate of the equalizing gas $D_{air}$ between a zero value and a maximum value $D_{air,max}$;
      - sensors for pressure ($P_H$, $P_O$, $P_{air}$), which are suitable for measuring the pressure in each of the first and second chambers and in the enclosure, between the atmospheric pressure and the maximum pressure value $P_{max}$;
      - at least three regulating valves ($V_H$, $V_O$, $V_{air}$), arranged outside the enclosure and on the outlet line of the first chamber or chambers, of the second chamber or chambers and of the enclosure, respectively, each valve being suitable for each operating at a temperature greater than the condensation temperature of the wet gas at the maximum pressure $P_{max}$ considered, each valve being suitable to be opened from 0% to 100% and having a capacity $K_v$ suited to the maximum pressure $P_{max}$ and to the average flow rate of the gas considered on each of the three outlet lines;
      - means for heating the lines containing the wet gas to a temperature greater than the condensation temperature of this wet gas at the maximum pressure $P_{max}$ considered;
      - command and automatic control means for commanding and automatically controlling the regulating valves ($V_H$, $V_O$, $V_{Air}$) as a function of the differences in pressure values measured by the pressure sensors such as to obtain a minimum difference in pressure between the first chamber or chambers, the second chamber or chambers and the enclosure;

system **characterized in that**, by including the volume of the lines for circulating gas upstream and downstream of the enclosure and of the chambers, i.e. $Vol_H$ being the volume of the first chamber or chambers, $Vol_O$ the volume of the second chamber or chambers and $Vol_{air}$ the volume of the enclosure, the flow rate regulators are dimensioned to comply with the ratio:

$$\frac{Vol_H}{D_{H,max}} = \frac{Vol_O}{D_{O,max}} = \frac{Vol_{air}}{D_{air,max}}.$$

2. The system as claimed in claim 1, a condenser (50) for the wet gas, arranged downstream of the regulating valve $V_H$, on the outlet line of the first chamber or chambers.

3. The system as claimed in claim 1 or 2, the command and automatic control means being furthermore suitable for commanding and automatically controlling the flow rate regulators for the second gas $D_O$ and for the equalizing gas $D_{Air}$ as a function of the opening state of the regulating valves for the second gas Vo and for the equalizing gas $V_{Air}$, in order to prevent the complete opening or closing states of the valves for the second gas $V_O$ and for the equalizing gas $V_{Air}$.

4. The system as claimed in one of claims 1 to 3, comprising a high-temperature electrolysis or co-electrolysis (HTE) reactor comprising a stack (20) of solid oxide elementary (co-)electrolysis cells each comprising an anode, a cathode, and an electrolyte inserted between the anode and the cathode, the cells being electrically connected in series, the stack comprising two electric terminals for feeding current to the cells and defining chambers for circulating steam and hydrogen or steam, hydrogen and carbon dioxide ($CO_2$) on the cathodes as first chambers, and chambers for circulating air or nitrogen or oxygen or a gas mixture containing oxygen on the anodes as second chambers.

5. The system as claimed in one of claims 1 to 3, comprising a high-temperature fuel-cell (SOFC) stack comprising a stack (20) of solid oxide elementary electrochemical cells each comprising an anode, a cathode, and an electrolyte inserted between the anode and the cathode, the cells being electrically connected in series, the stack comprising two electric terminals for the cell current recovery and defining chambers for circulating dihydrogen or another fuel gas or a mixture containing a fuel gas on the anodes as first chambers and chambers for circulating air or nitrogen or oxygen or a gas mixture containing oxygen on the cathodes as second chambers.

6. The system as claimed in one of the preceding claims, comprising at least three sensors for absolute pressure ($P_H$, $P_O$, $P_{air}$), which are suitable for each measuring the pressure in each of the first chambers, in each of the second chambers and in the enclosure, respectively.

7. The system as claimed in one of claims 1 to 5, comprising at least one sensor for absolute pressure $P_H$, suitable for each measuring the pressure in each of the first chambers, and comprising at least two differential sensors for pressure which are suitable for measuring the difference in pressure between the second chamber or chambers and the first chamber or chambers $\Delta P_O = (P_O - P_H)$ and between the enclosure and the first chamber or chambers $\Delta P_{air} = (P_{air} - P_H)$, respectively.

8. The system as claimed in one of the preceding claims, further comprising bypass valves $V_{H,bypass}$, $V_{O,bypass}$ and $V_{air,bypass}$ which are each arranged in parallel with the regulating valves $V_H$, Vo and $V_{air}$, respectively.

9. An operating method for the system as claimed in one of the preceding claims, comprising the following steps:

a/ defining the following operating setpoints:

a1/ defining a flow rate $D_H$ that corresponds to the quantity of potentially wet gas necessary for a predetermined electrochemical operating point;
a2/ defining a flow rate Do which corresponds to the quantity of second gas necessary for a predetermined electrochemical operating point;
a3/ defining a flow rate $D_{air}$ which corresponds to the quantity of second gas necessary for detection and safety with regard to the leaks and for preventing the formation of an explosive atmosphere in the enclosure;
a4/ defining a pressure $P_{setpoint}$ for the predetermined operating point;
a5/ defining the differential pressure $\Delta P_{O,setpoint}$ corresponding to the deviation in pressures between that prevailing in the second chamber or chambers and that in the first chamber or chambers;
a6/ defining the differential pressure $\Delta P_{air,setpoint}$ corresponding to the deviation in pressures between that in the enclosure and that prevailing in the first chamber or chambers;

b/ using the following regulations:

b1/ actuating the wet gas flow rate regulator(s) in order to regulate the flow rate $D_H$ of the wet gas;

b2/ actuating the second-gas flow rate regulator(s) in order to regulate the flow rate Do entering the second chamber or chambers;

b3/ actuating the equalizing gas flow rate regulator(s) in order to regulate the flow rate $D_{air}$ entering the enclosure;

b4/ actuating the regulating valve $V_H$ for the wet gas in order to regulate the actual pressure $P_H$ of the first chamber or chambers to the setpoint value $P_{setpoint}$;

b5/ actuating the valve $V_O$ for the second gas such that the actual differential pressure between the second chamber or chambers and the first chamber or chambers $\Delta P_O=(P_O P_H)$ is regulated as a function of the error measured with respect to the setpoint $(\Delta P_{O,setpoint}-\Delta P_O)$, such that the pressure Po of the second gas follows that $P_H$ of the first chamber or chambers with the setpoint differential pressure $\Delta P_{O,setpoint}$;

b6/ actuating the valve $V_{air}$ for the equalizing gas such that the actual differential pressure between the enclosure and the first chamber or chambers $\Delta P_{air}=(P_{air}-P_H)$ is regulated as a function of the error measured with respect to the setpoint $(\Delta P_{air,setpoint}-\Delta P_{air})$, such that the pressure $P_{air}$ of the equalizing gas of the enclosure that $P_H$ of the first chamber or chambers with the setpoint differential pressure $\Delta P_{air,setpoint}$.

10. The operating method as claimed in claim 9, further comprising a flow rate increasing step for the second gas $D_O$ and for the equalizing gas $D_{Air}$ if the regulating valves for the second gas $V_O$ and for the equalizing gas $V_{Air}$, respectively, are close to a complete closing state.

11. The operating method as claimed in claim 9, further comprising a flow rate reducing step for the second gas $D_O$ and for the equalizing gas $D_{Air}$ if the regulating valves for the second gas $V_O$ and for the equalizing gas $V_{Air}$, respectively, are close to a complete opening state.

$$O^{2-} \rightarrow 1/2\ O_2 + 2e\text{-}$$

$$O_2$$

**Fig. 1**

$$H_2O$$

$$H_2$$

$$H_2O + 2e^- \rightarrow H_2 + O^{2-}$$

**Fig. 2**

$$\frac{1}{2}\,O_2 + 2e- \rightarrow O^{2-}$$

$O_2$

$O^{2-}$

$H_2$　　　　　$H_2O$

$$H_2 + O^{2-} \rightarrow H_2O + 2e^-$$

**Fig. 3**

$V_{O,bypass}$

$D_O$　$P_O$

Chambre oxygène

$V_O$

$V_{H,bypass}$

$D_H$　$P_H$

Chambre hydrogène

condenseur

$V_H$　$V_{air,bypass}$

$D_{air}$　$P_{air}$

$V_{air}$

**Fig. 4**

**23**

Si V$_O$<5% ou >80%

D$_O$

$\Delta$P$_O$

Si $\Delta$P$_O \neq \Delta$P$_{O,consigne}$

V$_O$

P$_H$

Si P$_H \neq$P$_{consigne}$

D$_H$

$\Delta$P$_{air}$

Si $\Delta$P$_{air} \neq \Delta$P$_{air,consigne}$

V$_H$

**21**

**50**

D$_{air}$

V$_{air}$

Si V$_{air}$<5% ou >80%

**40**

**Fig.5**

V$_H$=**PID**(P$_{consigne}$-P$_H$)

$\Delta$P$_O$=P$_O$-P$_H$

V$_O$=**PID**($\Delta$P$_{O,consigne}$-$\Delta$P$_O$)

$\Delta$P$_{air}$=P$_{air}$-P$_H$

V$_{air}$=**PID**($\Delta$P$_{air,consigne}$-$\Delta$P$_{air}$)

**Fig.6**

**Fig.7**

**Fig.8**

**Fig.9**

**Fig.10**

ENTRÉE GAZ
D'EQUILIBRAGE

ENTRÉE
AIR

ENTRÉE
H2O

SORTIE GAZ
D'EQUILIBRAGE

**Fig.11**

GAZ
D'EQUILIBRAGE

**Fig.12**

SORTIE
H2

ENTRÉE
AIR

ENTRÉE
H2O

**Fig.13**

110
111 } 11
12
(E)
(B) X
(C1);9;10
57
61
(E)
13
M₁

81 80 82
54
63
57
51
54
14

18
16
19

SORTIE
H₂

ENTRÉE
AIR

SORTIE
O₂

8

111 X
5.1

81
80
82 } 8

613
610 } 61
614

13

M1

(C1)

**Fig.14**
5.2

(C2) (B)

81
8 80
82

613
610 } 61
614

13

12

M2

5.3

18
16
14
19
17

110

EP 3 360 187 B1

Fig.15

ENTRÉE
AIR

SORTIE
O₂

ENTRÉE
H₂O

SORTIE
H₂

Fig.16

29

## Fig.17

ENTRÉE GAZ
D'EQUILIBRAGE

SORTIE GAZ
D'EQUILIBRAGE

## Fig.18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011110676 A
- FR 2957361 A1
- US 20020081471 A
- US 6689499 B2

- WO 2012008954 A1
- US 7985507 B2
- FR 1462699

**Littérature non-brevet citée dans la description**

- **A. MOMMA ; K. TAKANO ; Y. TAKANA ; T.KATO ; A. YAMAMOTO.** Expérimental investigation of the effect of operating pressure on the performance of SOFC and SOEC. *ECS Transactions,* 06 Octobre 2013, vol. 57 (1), 699-708
- **J.E. O'BRIEN ; X ZHANG ; G. K. HOUSLEY ; K. DEWALL ; L. MOORE-MCATEER ; G. TAO.** High Temperature Electrolysis Pressurized Experiment Design, Operation, and Results. *Idaho National Laboratory,* 13 Septembre 2012, https://inldigitallibrary.inl.gov/sites/sti/sti/5516323.pdf
- **M. HENKE ; C. WILLICH ; C. WESTNER ; F. LEUCHT ; J. KALLO ; W. G. BESSLER ; K. A. FRIEDRICH ; FUEL CELLS.** *A validated multi-scale model of a SOFC stack at elevated pressure,* 30 Août 2013, vol. 13 (5), 773-780

- **H.W. CHANG ; C.M. HUANG ; S.S. SHY.** An experimental investigation of pressurized planar solid oxide fuel cells using two différent flow distributors. *Journal of Power Sources,* 15 Mars 2014, vol. 250, 21-29
- **A. A. BURKE ; L. G. CARREIRO ; J. R. IZZO JR.** Pressurized testing of a planar solid oxide fuel cell stack. *International Journal of Hydrogen Energy,* 10 Septembre 2013, vol. 38 (31), 13774-13780
- **S. HOJGAARD JENSEN ; X. SUN ; S. DALGAARD EBBESEN ; R. KNIBBE ; M. MOGENSEN.** Hydrogen and synthetic fuel production using pressurized solid oxide electrolysis cells. *International Journal of Hydrogen Energy,* 24 Juillet 2010, vol. 35, 9544-9549
- **S. SEIDLER ; M. HENKEA ; J. KALLOA ; W. G. BESSLERA ; U. MAIERB ; A. FRIEDRICH.** Pressurized solid oxide fuel cells: Experimental studies and modeling. *Journal of Power Sources,* 07 Octobre 2010, vol. 196, 7195-7202